# EUROPEAN PATENT APPLICATION

(11) **EP 4 780 073 A1**
(43) Date of publication of application: **22.07.2026**
(21) Application number: 24884607.3
(22) Date of filing: 25.10.2024
(51) Int. Cl.: H04W 36/08, H04W 28/26

(54) **CELL HANDOVER METHOD, AND EQUIPMENT AND SYSTEM**

(30) Priority: 31.10.2023 CN 202311439072
(71) Applicant: HUAWEI TECHNOLOGIES CO., LTD., Shenzhen 518129 (CN)
(72) Inventor: HU, Xingxing, Shenzhen, Guangdong 518129 (CN); LU, Rui, Shenzhen, Guangdong 518129 (CN)
(74) Representative: Körber, Martin Hans
(86) International application number: PCT/CN2024/127427
(87) International publication number: WO 2025/092604

(57) **Abstract**

A cell handover method, a device, and a system are provided. The method is applied to a first base station and includes: if it is determined that a user equipment UE needs to be handed over from a first cell to a second cell, determining whether the UE is allowed to use a first radio resource configuration in the second cell, where the first radio resource configuration is allocated by the first cell to the UE; and if the UE is allowed to use the first radio resource configuration in the second cell, sending a first handover command to the UE, where the first handover command instructs the UE to use the first radio resource configuration in the second cell. According to the foregoing method, network overheads can be reduced.

## Description

This application claims priority to Chinese Patent Application No. 202311439072.1, filed with the China National Intellectual Property Administration on October 31, 2023 and entitled "CELL HANDOVER METHOD, DEVICE, AND SYSTEM", which is incorporated herein by reference in its entirety.

### TECHNICAL FIELD

This application relates to the communication field, and in particular, to a cell handover method, a device, and a system.

### BACKGROUND

Communication based on a non-terrestrial network (Non-Terrestrial Network, NTN) represented by non-terrestrial devices such as satellites, unmanned aerial vehicles, and high altitude platforms has advantages of wide coverage, long communication distance, high reliability, high flexibility, and high throughput. Because this communication manner is not affected by geographical environments, climate conditions, and natural disasters, this communication manner has been widely used in fields including aeronautical communications, maritime communications, military communications, and the like. If NTN devices, such as satellites, are introduced into a 5th generation (5th Generation, 5G) mobile network and a mobile network after the 5th generation (5th Generation, 5G) mobile network, communication services can be provided for areas that are difficult for terrestrial networks to cover, such as oceans and forests, reliability of 5G communication can be enhanced, for example, more stable communication services with higher quality can be provided for trains, airplanes, and users on these vehicles, and more data transmission resources can be provided to support more connections.

However, due to movement of a satellite or a user equipment (user equipment, UE), the UE frequently performs cell handover. As a result, handover commands need to be transmitted frequently in a communication network, leading to high network overheads.

### SUMMARY

This application provides a cell handover method, a device, and a system, to reduce network overheads.

According to a first aspect, this application provides a cell handover method. The method is applied to a first base station and includes: if it is determined that a user equipment UE needs to be handed over from a first cell to a second cell, determining whether the UE is allowed to use a first radio resource configuration in the second cell, where the first radio resource configuration is allocated by the first cell to the UE; and if the UE is allowed to use the first radio resource configuration in the second cell, sending a first handover command to the UE, where the first handover command instructs the UE to use the first radio resource configuration in the second cell.

The cell handover method provided in this application may be applied to a scenario in which both the first cell and the second cell are serving cells of the first base station. The first cell is a source cell, and the second cell is a target cell. When the UE is handed over from the source cell to the target cell, the first base station may determine whether a radio resource configuration that can be currently allocated by the second cell to the UE is the same as the first radio resource configuration that has been allocated by the source cell to the UE. If the two radio resource configurations are the same, the UE is indicated to continue to use the first radio resource configuration in the second cell. Because the UE continues to use the first radio resource configuration, resource reconfiguration does not need to be performed. In this way, transmission overheads incurred in a network between the first base station and the UE due to radio resource reconfiguration are reduced, that is, network overheads are reduced.

In a possible implementation, the first base station determines that the UE needs to be handed over from the source cell to the target cell, and determines whether the UE is allowed to continue to use the first radio resource configuration in the second cell, that is, determines whether the UE is allowed to inherit the first radio resource configuration in the target cell. If the UE is allowed to inherit the first radio resource configuration in the target cell, the first base station sends the first handover command to the UE. When the UE receives the first handover command, because the first handover command does not carry a new radio resource configuration, the UE may determine, based on this, that the UE is allowed to continue to use the first radio resource configuration after being handed over to the target cell, and update a current serving cell to the second cell based on the first handover command. The first handover command may carry a first identifier, and the first identifier indicates an identifier of the second cell. Optionally, the indicating the identifier of the second cell may be indicating a physical cell identifier (Physical Cell Identifier, PCI) of the second cell. Because a direct transmission distance between the UE and an NTN device is long, transmission overheads are higher than transmission overheads of terrestrial communication. Therefore, transmission overheads during cell handover are reduced, and network overheads can be greatly reduced.

Optionally, the first base station determines, based on a radio resource in the first radio resource configuration, whether the radio resource of the target cell is occupied. If the radio resource is not occupied, in other words, the radio resource is idle, a same radio resource may be allocated to the UE, and the UE may continue to use the first radio resource configuration in the target cell. If the radio resource is occupied, it is determined that the UE is not allowed to use the first radio resource configuration in the second cell, and the second cell reallocates a radio resource to the UE, and generates a second radio resource configuration. The first base station sends a second handover command to the UE, where the second handover command carries the second radio resource configuration.

In a possible implementation, a handover command carries a first identifier, the first identifier indicates an identifier of the second cell, and the handover command includes the first handover command or a second handover command.

In a possible implementation, the first base station and the UE may pre-agree on or determine, based on a protocol specification or in another manner, a type of a handover command. When it is determined that a handover command including the second radio resource configuration is the second handover command, if the UE receives the second handover command, the UE performs reconfiguration based on the second radio resource configuration indicated in the second handover command.

In a possible implementation, a third cell is a serving cell of the second base station, the second cell is a serving cell of the first base station, and the UE needs to be handed over from the third cell of the second base station to the second cell. In this scenario, the third cell is the source cell, and the second cell is the target cell. The UE needs to be handed over from the source cell to the target cell, and this is equivalent to that the second base station needs to interact with the first base station. The cell handover method further includes: receiving a handover request, where the handover request is sent by the second base station when the UE needs to be handed over from the third cell to the second cell, the handover request is for requesting that the UE uses a third radio resource configuration in the second cell, and the third radio resource configuration is allocated by the third cell to the UE; and if the UE is allowed to use the third radio resource configuration in the second cell, sending a first handover request acknowledgment to the second base station, where the first handover request acknowledgment indicates that the UE uses the third radio resource configuration in the second cell, so that the second base station sends the first handover command to the UE, and the first handover command further instructs the UE to use the third radio resource configuration in the second cell; or if the UE is not allowed to use the third radio resource configuration in the second cell, sending a second handover request acknowledgment to the second base station, where the second handover request acknowledgment indicates that the UE uses the second radio resource configuration in the second cell, so that the second base station sends the second handover command to the UE.

The cell handover method provided in this application may be applied to a scenario in which the target cell is the second cell of the first base station and the source cell is the third cell of the second base station. The second base station allocates the third radio resource configuration to the UE. When the UE needs to be handed over from the third cell to the second cell, the second base station requests the first base station to continue to use the third radio resource configuration. The first base station determines whether the third radio resource configuration is allowed to be used in the second cell, in other words, whether a radio resource that can be currently provided by the second cell to the UE is the same as a radio resource in the third radio resource configuration allocated by the third cell to the UE. If the two radio resources are the same, the UE is allowed to continue to use the third radio resource configuration in the second cell, and does not need to perform resource reconfiguration. In this way, overheads incurred in a network between the first base station and the UE due to radio resource reconfiguration are reduced.

In a scenario in which the target cell is the second cell of the first base station, and the source cell is the third cell of the second base station, the first base station, the second base station, and the UE may pre-agree on or determine, based on a protocol specification or in another manner, a type of a handover command. When it is determined that a handover command including the second radio resource configuration is the second handover command, if the UE receives the second handover command, the UE performs reconfiguration based on the second radio resource configuration indicated in the second handover command. If the handover command carries only the first identifier, the handover command is the first handover command. If the UE receives the first handover command, the UE inherits the third radio resource configuration, that is, continues to use the third radio resource configuration in the second cell.

In a possible implementation, the method further includes: determining, according to a pre-stored resource allocation rule, that the UE uses the first radio resource configuration or uses the second radio resource configuration in the second cell. In a scenario in which both the first cell and the second cell are serving cells of the first base station, the first base station may pre-store the resource allocation rule, and both the first cell and the second cell allocate a radio resource to the UE according to the pre-stored resource allocation rule.

In a possible implementation, the method further includes: receiving a negotiation request sent by the second base station, where the negotiation request indicates a resource allocation rule; and determining, according to the resource allocation rule, that the UE uses the third radio resource configuration or uses the second radio resource configuration in the second cell. In a scenario in which the target cell is the second cell of the first base station and the source cell is the third cell of the second base station, the first base station and the second base station negotiate to determine the resource allocation rule, and the second cell and the third cell allocate a radio resource to the UE according to the resource allocation rule.

In the cell handover method provided in this application, it needs to be determined whether the radio resource allocated by the second cell, that is, the target cell, to the UE can continue to use a radio resource configuration that has been allocated by the source cell to the UE, for example, the first radio resource configuration allocated by the first cell or the third radio resource configuration allocated by the third cell. To increase a possibility that the UE inherits a radio resource configuration, in this application, each cell may allocate a radio resource to the UE according to the resource allocation rule, and obtain a radio resource configuration, thereby reducing network overheads.

According to a second aspect, this application provides a cell handover method. The method is applied to a UE and includes: receiving a first handover command, where the first handover command instructs the UE to use a first radio resource configuration in a second cell, and the first radio resource configuration is allocated by a first cell to the UE; and based on the first handover command, performing handover from the first cell to the second cell, and using the first radio resource configuration in the second cell.

This method may be applied to a scenario in which both the first cell and the second cell are serving cells of a first base station, where the first cell is a source cell, and the second cell is a target cell.

In a possible implementation, the method further includes: based on the first handover command, performing handover from the third cell to the second cell, and using the third radio resource configuration in the second cell, where the first handover command further instructs the UE to use the third radio resource configuration in the second cell, and the third radio resource configuration is allocated by the third cell to the UE.

This method may be applied to a scenario in which the third cell is a serving cell of a second base station, and the second cell is a serving cell of the first base station, where the third cell is a source cell, and the second cell is a target cell.

In a possible implementation, a handover command carries a first identifier, the first identifier indicates an identifier of the second cell, and the handover command includes the first handover command or a second handover command.

According to a third aspect, this application provides a cell handover method. The method is applied to a second base station and includes: if it is determined that a user equipment UE needs to be handed over from a third cell to a second cell, sending a handover request to a first base station, where the handover request is for requesting that the UE uses a third radio resource configuration in the second cell, and the third radio resource configuration is allocated by the third cell to the UE; and if a first handover request acknowledgment is received, sending a first handover command to the UE, where the first handover request acknowledgment indicates, to the second base station, that the UE uses the third radio resource configuration in the second cell, and the first handover command instructs the UE to use the third radio resource configuration in the second cell.

This method may be applied to a scenario in which the third cell is a serving cell of the second base station, and the second cell is a serving cell of the first base station, where the third cell is a source cell, and the second cell is a target cell.

In a possible implementation, the method further includes: if a second handover request acknowledgment is received, sending a second handover command to the UE, where the second handover request acknowledgment indicates, to the second base station, that the UE uses a second radio resource configuration in the second cell, the second handover command carries the second radio resource configuration, and the second radio resource configuration is allocated by the second cell to the UE.

In a possible implementation, the method further includes: a handover command carries a first identifier, the first identifier indicates an identifier of the second cell, and the handover command includes the first handover command or the second handover command.

In a possible implementation, the method further includes: sending a negotiation request to the first base station, where the negotiation request indicates a resource allocation rule; and determining, according to the resource allocation rule, that the UE uses the third radio resource configuration in the third cell.

According to a fourth aspect, this application provides a cell handover method. The method is applied to a first base station and includes: receiving a handover request, where the handover request is sent by a second base station when a UE needs to be handed over from a third cell to a second cell, the handover request is for requesting that the UE uses a third radio resource configuration in the second cell, and the third radio resource configuration is allocated by the third cell to the UE; if the UE is allowed to use the third radio resource configuration in the second cell, sending a first handover request acknowledgment to the second base station, where the first handover request acknowledgment indicates that the UE uses the third radio resource configuration in the second cell, so that the second base station sends the first handover command to the UE, and the first handover command further instructs the UE to use the third radio resource configuration in the second cell.

In a possible implementation, the method further includes: if the UE is not allowed to use the third radio resource configuration in the second cell, sending a second handover request acknowledgment to the second base station, where the second handover request acknowledgment indicates that the UE uses a second radio resource configuration in the second cell, so that the second base station sends a second handover command to the UE, where the second radio resource configuration is allocated by the second cell to the UE.

In a possible implementation, a handover command carries a first identifier, the first identifier indicates an identifier of the second cell, and the handover command includes the first handover command or the second handover command.

In a possible implementation, the method further includes: receiving a negotiation request sent by the second base station, where the negotiation request indicates a resource allocation rule; and determining, according to the resource allocation rule, that the UE uses the third radio resource configuration or uses the second radio resource configuration in the second cell.

According to a fifth aspect, this application provides a first base station. The first base station includes: a processing module, configured to: if it is determined that a UE needs to be handed over from a first cell to a second cell, determine whether the UE is allowed to use a first radio resource configuration in the second cell, where the first radio resource configuration is allocated by the first cell to the UE; and a sending module, configured to: if the processing module determines the UE is allowed to use the first radio resource configuration in the second cell, send a first handover command to the UE, where the first handover command instructs the UE to use the first radio resource configuration in the second cell.

In a possible implementation, the sending module is further configured to: if the processing module determines that the UE is not allowed to use the first radio resource configuration in the second cell, send a second handover command to the UE, where the second handover command carries a second radio resource configuration, and the second radio resource configuration is allocated by the second cell to the UE.

In a possible implementation, the first base station further includes a receiving module, configured to receive a handover request, where the handover request is sent by a second base station when the UE needs to be handed over from a third cell to the second cell, the handover request is for requesting that the UE uses a third radio resource configuration in the second cell, and the third radio resource configuration is allocated by the third cell to the UE. The sending module is further configured to: if the processing module determines that the UE is allowed to use the third radio resource configuration in the second cell, send a first handover request acknowledgment to the second base station, where the first handover request acknowledgment indicates that the UE uses the third radio resource configuration in the second cell, so that the second base station sends the first handover command to the UE, and the first handover command further instructs the UE to use the third radio resource configuration in the second cell. The sending module is further configured to: if the processing module determines that the UE is not allowed to use the third radio resource configuration in the second cell, send a second handover request acknowledgment to the second base station, where the second handover request acknowledgment indicates that the UE uses the second radio resource configuration in the second cell, so that the second base station sends the second handover command to the UE.

In a possible implementation, a handover command carries a first identifier, the first identifier indicates an identifier of the second cell, and the handover command includes the first handover command or the second handover command.

In a possible implementation, the processing module is specifically configured to determine, according to a pre-stored resource allocation rule, that the UE uses the first radio resource configuration or uses the second radio resource configuration in the second cell.

In a possible implementation, the receiving module is further configured to receive a negotiation request sent by the second base station, where the negotiation request indicates a resource allocation rule. The processing module is further configured to determine, according to the resource allocation rule, that the UE uses the third radio resource configuration or uses the second radio resource configuration in the second cell.

According to a sixth aspect, this application provides a UE. The UE includes: a receiving module, configured to receive a first handover command, where the first handover command instructs the UE to use a first radio resource configuration in a second cell, and the first radio resource configuration is allocated by a first cell to the UE; and a processing module, configured to: based on the first handover command, perform handover from the first cell to the second cell, and use the first radio resource configuration in the second cell.

In a possible implementation, the first handover command further instructs the UE to use the third radio resource configuration in the second cell. The processing module is further configured to: based on the first handover command, perform handover from the third cell to the second cell, and use the third radio resource configuration in the second cell, where the third radio resource configuration is allocated by the third cell to the UE.

In a possible implementation, a handover command carries a first identifier, the first identifier indicates an identifier of the second cell, and the handover command includes the first handover command or a second handover command.

According to a seventh aspect, this application provides a second base station. The second base station includes a sending module, configured to: if a processing module determines that a user equipment UE needs to be handed over from a third cell to a second cell, send a handover request to a first base station, where the handover request is for requesting that the UE uses a third radio resource configuration in the second cell, and the third radio resource configuration is allocated by the third cell to the UE.

The sending module is further configured to: if a receiving module receives a first handover request acknowledgment, send a first handover command to the UE, where the first handover request acknowledgment indicates, to the second base station, that the UE uses the third radio resource configuration in the second cell, and the first handover command instructs the UE to use the third radio resource configuration in the second cell.

In a possible implementation, the sending module is further configured to: if the receiving module receives a second handover request acknowledgment, send a second handover command to the UE, where the second handover request acknowledgment indicates, to the second base station, that the UE uses a second radio resource configuration in the second cell, the second handover command carries the second radio resource configuration, and the second radio resource configuration is allocated by the second cell to the UE.

In a possible implementation, a handover command carries a first identifier, the first identifier indicates an identifier of the second cell, and the handover command includes the first handover command or the second handover command.

In a possible implementation, the sending module is further configured to send a negotiation request to the first base station, where the negotiation request indicates a resource allocation rule. The processing module is further configured to determine, according to the resource allocation rule, that the UE uses the third radio resource configuration in the third cell.

According to an eighth aspect, this application provides a first base station. The first base station includes: a receiving module, configured to receive a handover request, where the handover request is sent by a second base station when a UE needs to be handed over from a third cell to a second cell, the handover request is for requesting that the UE uses a third radio resource configuration in the second cell, and the third radio resource configuration is allocated by the third cell to the UE; and a sending module, configured to: if a processing module determines that the UE is allowed to use the third radio resource configuration in the second cell, send a first handover request acknowledgment to the second base station, where the first handover request acknowledgment indicates that the UE uses the third radio resource configuration in the second cell, so that the second base station sends the first handover command to the UE, and the first handover command further instructs the UE to use the third radio resource configuration in the second cell.

In a possible implementation, the sending module is further configured to: if the processing module determines that the UE is not allowed to use the third radio resource configuration in the second cell, send a second handover request acknowledgment to the second base station, where the second handover request acknowledgment indicates that the UE uses a second radio resource configuration in the second cell, so that the second base station sends a second handover command to the UE, where the second radio resource configuration is allocated by the second cell to the UE.

In a possible implementation, a handover command carries a first identifier, the first identifier indicates an identifier of the second cell, and the handover command includes the first handover command or the second handover command.

In a possible implementation, the receiving module is further configured to receive a negotiation request sent by the second base station, where the negotiation request indicates a resource allocation rule. The processing module is further configured to determine, according to the resource allocation rule, that the UE uses the third radio resource configuration or uses the second radio resource configuration in the second cell.

According to a ninth aspect, this application provides a system. The system includes a UE and a first base station. The first base station is configured to implement some or all operations in any possible implementation of the first aspect. The UE is configured to implement some or all operations in any possible implementation of the second aspect.

In a possible implementation, the system further includes a second base station. The second base station is configured to implement some or all operations in any possible implementation of the third aspect.

According to a tenth aspect, this application provides a system. The system includes a UE, a first base station, and a second base station. The first base station is configured to implement some or all operations in any possible implementation of the first aspect. Alternatively, the first base station is configured to implement some or all operations in any possible implementation of the fourth aspect. The UE is configured to implement some or all operations in any possible implementation of the second aspect. The second base station is configured to implement some or all operations in any possible implementation of the third aspect.

According to an eleventh aspect, this application provides a communication apparatus. The communication apparatus includes at least one processor and a communication interface. The interface circuit is configured to exchange computer instructions or data with the processor. When the at least one processor executes a program or instructions, the communication apparatus implements some or all operations in any one of the first aspect or the possible implementations of the first aspect; or the communication apparatus implements some or all operations in any one of the second aspect or the possible implementations of the second aspect; or the communication apparatus implements some or all operations in any one of the third aspect or the possible implementations of the third aspect; or the communication apparatus implements some or all operations in any one of the fourth aspect or the possible implementations of the fourth aspect.

According to a twelfth aspect, this application provides a computer-readable storage medium. The computer-readable storage medium stores a computer program. When the computer program is executed by a processor, the method according to any one of the foregoing aspects and some or all operations included in any possible implementation of any one of the foregoing aspects are implemented.

According to a thirteenth aspect, this application provides a computer program product. The computer program product includes instructions. When the instructions are run on a processor, the method according to any one of the foregoing aspects and some or all operations included in any possible implementation of any one of the foregoing aspects are implemented.

According to a fourteenth aspect, this application provides a chip. The chip includes a port circuit and a processor. The port circuit is connected to the processor. The processor is configured to cause the chip to perform the method according to any one of the foregoing aspects and some or all operations included in any possible implementation of any one of the foregoing aspects.

It should be understood that the technical solutions in the second aspect to the fourteenth aspect of this application are consistent with or correspond to the technical solutions in the first aspect of this application, beneficial effects achieved by the aspects and corresponding feasible implementations are similar. Details are not described herein.

### BRIEF DESCRIPTION OF DRAWINGS

To describe technical solutions in embodiments of this application more clearly, the following briefly describes the accompanying drawings used in describing embodiments of this application. Apparently, the accompanying drawings in the following descriptions show merely some embodiments of this application, and a person of ordinary skill in the art may still derive other drawings from these accompanying drawings without creative efforts.
FIG. 1 is a diagram of a structure of a terrestrial communication network according to an embodiment of this application;
FIG. 2 is a diagram of a structure of a first deployment scheme for identifiers of cells served by a satellite according to an embodiment of this application;
FIG. 3 is a diagram of a structure of a second deployment scheme for identifiers of cells served by a satellite according to an embodiment of this application;
FIG. 4 is a schematic flowchart of a cell handover method according to an embodiment of this application;
FIG. 5 is a schematic flowchart of another cell handover method according to an embodiment of this application;
FIG. 6A and FIG. 6B are a schematic flowchart of another cell handover method according to an embodiment of this application;
FIG. 7 is a diagram of a transparent architecture of a satellite communication network according to an embodiment of this application;
FIG. 8 is a diagram of a regenerative architecture of a satellite communication network according to an embodiment of this application;
FIG. 9 is a diagram of another regenerative architecture of a satellite communication network according to an embodiment of this application;
FIG. 10 is a diagram of another regenerative architecture of a satellite communication network according to an embodiment of this application;
FIG. 11 is a schematic flowchart of another cell handover method according to an embodiment of this application;
FIG. 12 is a diagram of a scenario of resource groups corresponding to different physical areas according to an embodiment of this application;
FIG. 13 is a diagram of a structure of a first base station according to an embodiment of this application;
FIG. 14 is a diagram of another structure of a first base station according to an embodiment of this application;
FIG. 15 is a diagram of a structure of a UE according to an embodiment of this application;
FIG. 16 is a diagram of a structure of a second base station according to an embodiment of this application;
FIG. 17 is a diagram of a structure of a device 60 according to an embodiment of this application;
FIG. 18 is a diagram of a structure of a device 70 according to an embodiment of this application;
FIG. 19 is a diagram of a structure of a system 600 according to an embodiment of this application; and
FIG. 20 is a diagram of a structure of a system 700 according to an embodiment of this application.

### DESCRIPTION OF EMBODIMENTS

To make a person skilled in the art understand technical solutions in this application better, the following clearly describes the technical solutions in embodiments of this application with reference to the accompanying drawings in embodiments of this application. It is clear that the described embodiments are merely some rather than all of embodiments of this application.

The term "and/or" in this specification describes only an association relationship between associated objects and represents that three relationships may exist. For example, A and/or B may represent the following three cases: Only A exists, both A and B exist, and only B exists.

In the specification and claims in embodiments of this application, the terms such as "first" and "second" are intended to distinguish between different objects but do not indicate a particular order of the objects. For example, a first target object, a second target object, and the like are used for distinguishing between different target objects, but are not used for describing a specific order of the target objects.

In addition, in embodiments of this application, the terms "example" or "for example" are used to represent giving an example, an illustration, or a description. Any embodiment or design solution described as an "example" or "for example" in embodiments of this application should not be explained as being more preferred or having more advantages than another embodiment or design solution. To be precise, use of the terms such as "example" or "for example" is intended to present a relative concept in a specific manner.

In the descriptions of embodiments of this application, unless otherwise stated, "a plurality of" means two or more. For example, a plurality of processing units mean two or more processing units, and a plurality of systems mean two or more systems.

For ease of understanding, the following first explains and describes related nouns or terms used in embodiments of this application.

### 1. NTN device

An NTN is a generic term for networks involving non-terrestrial flying objects (devices). The non-terrestrial network may usually include a satellite communication network, a high altitude platform system (High Altitude Platform System, HAPS), and an air-to-ground network. The NTN device to which embodiments of this application are applicable has features of the foregoing NTN. NTN devices include satellites, airships, unmanned aerial vehicles, and the like.

### 2. UE

The UE is also referred to as a terminal device, a mobile station (Mobile Station, MS), a mobile terminal (Mobile Terminal, MT), or the like, and is a device that provides at least one of voice and data connectivity for a user. For example, the UE includes a mobile phone, a notebook computer, a palmtop computer, a tablet computer, a mobile Internet device (Mobile Internet Device, MID), a wearable device, an augmented reality (Augmented Reality, AR) device, a virtual reality (Virtual Reality, VR) device, a wireless terminal in a smart city (Smart City), a wireless terminal in a smart home (Smart Home), a wireless terminal in industrial control (Industrial Control), a wireless terminal in self-driving (Self-Driving), a wireless terminal in a remote medical surgery (Remote Medical Surgery), a wireless terminal in a smart grid (Smart Grid), and a wireless terminal in transportation security (Transportation Safety).

### 3. Base station

The base station is also referred to as an access network device, and is a radio access network (Radio Access Network, RAN) node (or device) that connects a UE to a wireless network. The RAN node includes a continuously evolved NodeB (gNB), a transmission reception point (Transmission Reception Point, TRP), an evolved NodeB (evolved NodeB, eNB), a wireless fidelity (Wireless Fidelity, Wi-Fi) access point (Access Point, AP), a radio network controller (Radio Network Controller, RNC), a NodeB (NodeB, NB), a base station controller (Base Station Controller, BSC), a base transceiver station (Base Transceiver Station, BTS), a home base station, a baseband unit (BaseBand Unit, BBU), or the like. For example, in a possible network structure, the base station may include a central unit (Central Unit, CU) node, a distributed unit (Distributed Unit, DU) node, or a RAN device including a CU node and a DU node. The RAN device including the CU node and the DU node splits protocol layers of a gNB in an NR system. Functions of a part of the protocol layers are centrally controlled by a CU, and functions of a part or all of remaining protocol layers are distributed in a DU, and the CU centrally controls the DU.

### 4. Core network device

The core network device is a device in a core network (Core Network, CN) that provides service support for a UE. The core network device includes an access and mobility management function (Access And Mobility Management Function, AMF) entity, a session management function (Session Management Function, SMF) entity, a user plane function (User Plane Function, UPF) entity, and the like.

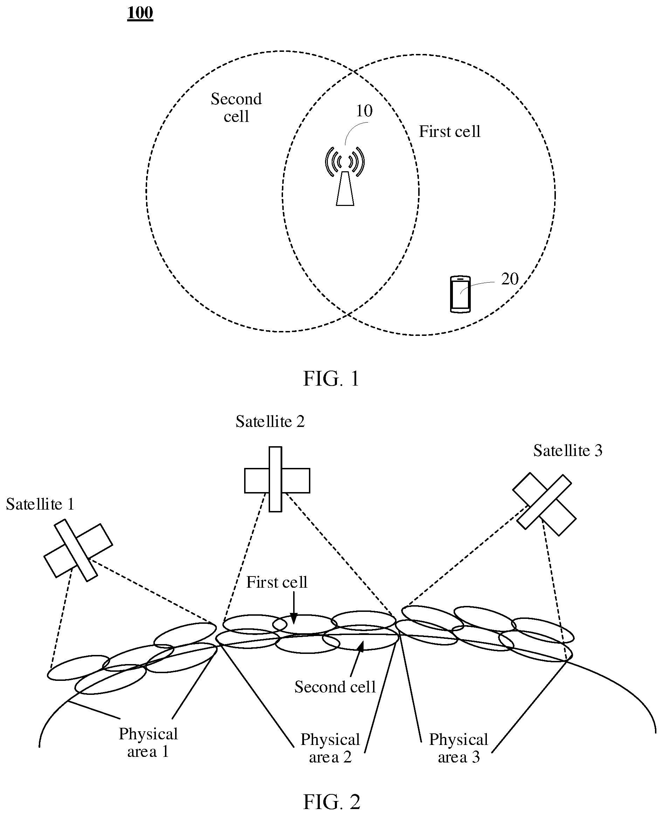

FIG. 1 is a structure of a terrestrial communication network according to an embodiment of this application. As shown in FIG. 1, the network 100 includes a base station 10 and a UE 20. For terrestrial communication, one base station may include a plurality of cells. An identifier of each cell is stable, and does not change within specific time, for example, does not change within one month. The identifier of the cell includes a cell identifier and a broadcast area identifier. The cell identifier includes a PCI and a global cell identifier (Cell Global Identifier, CGI). The broadcast area identifier includes a tracking area code (Tracking Area Code, TAC) and a tracking area identity (Tracking Area Identity, TAI). Refer to FIG. 1. The base station 10 includes a first cell and a second cell. This embodiment of this application is described by using an example in which a PCI of a cell needs to be updated after the UE performs cell handover, and a PCI of the first cell is different from a PCI of the second cell. However, this example does not constitute a limitation.

For the NTN, satellite communication is used as an example. Because a satellite moves at a high speed, a physical area covered by the satellite changes. A higher orbit of the satellite indicates a larger coverage area of the satellite but a longer communication delay. Generally, there may be the following types of orbits of satellites by altitudes: a low earth orbit (Low Earth Orbit, LEO), a medium earth orbit (Medium Earth Orbit, MEO), and a geosynchronous earth orbit (also referred to as a geostationary orbit) (Geosynchronous Earth Orbit, GEO). An orbital altitude of the LEO ranges from 160 km to 2,000 km. An orbital altitude of the MEO ranges from 2,000 km to 35,786 km. An orbital altitude of GEO is 35,786 km, and a location of a satellite on this orbit with respect to the earth is unaffected by earth rotation. For the cell identifier and the broadcast area identifier in the satellite, there are two deployment schemes.

A first deployment scheme is shown in FIG. 2. An identifier of each cell is bound to a physical area. It is assumed that the first cell and the second cell in FIG. 1 are located in a physical area 2 in FIG. 2. The physical areas of the first cell and the second cell on the earth do not change, and cell identifiers and broadcast area identifiers corresponding to the first cell and the second cell remain unchanged or remain unchanged within a period of time. Further, frequencies corresponding to the first cell and the second cell are also unchanged. As shown in FIG. 2, after a satellite (which may be referred to as an old satellite, and a satellite 2 in FIG. 2 is used as an example) is removed, another satellite (which may be referred to as a new satellite, and a satellite 1 in FIG. 2 is used as an example) provides a communication service for the first cell and the second cell. For example, a movement trajectory of the satellite in FIG. 2 is that a coverage area of the satellite 2 changes after the satellite 2 moves, and covering the physical area 2 changes to covering a physical area 3; and that after the satellite 1 moves, a coverage area changes from a physical area 1 to the physical area 2. Because the first cell and the second cell are still in the physical area 2, and the physical area does not change, for a new satellite in the physical area 2, that is, the satellite 1, because the physical area of the first cell does not change, the cell identifier of the first cell is the same as the cell identifier of the first cell in the satellite 2, the broadcast area identifier of the first cell in the satellite 1 is the same as the broadcast area identifier of the first cell in the satellite 2, and the same is for the second cell. In this deployment method, the cell identifier is bound to the physical area, and if a location of a UE remains unchanged, and a cell sensed by the UE also remains unchanged. In this deployment, high-speed movement of a satellite does not change the cell sensed by the UE. In physical areas covered and sensed by the satellite, each cell still corresponds to a cell identifier of a current physical area of the cell, and a cell handover procedure does not need to be triggered for the UE due to satellite change. In this way, a quantity of cell handovers in a network is reduced, and signaling overheads are reduced. A cell in this deployment scheme is referred to as a quasi-earth fixed cell (quasi-earth fixed cell).

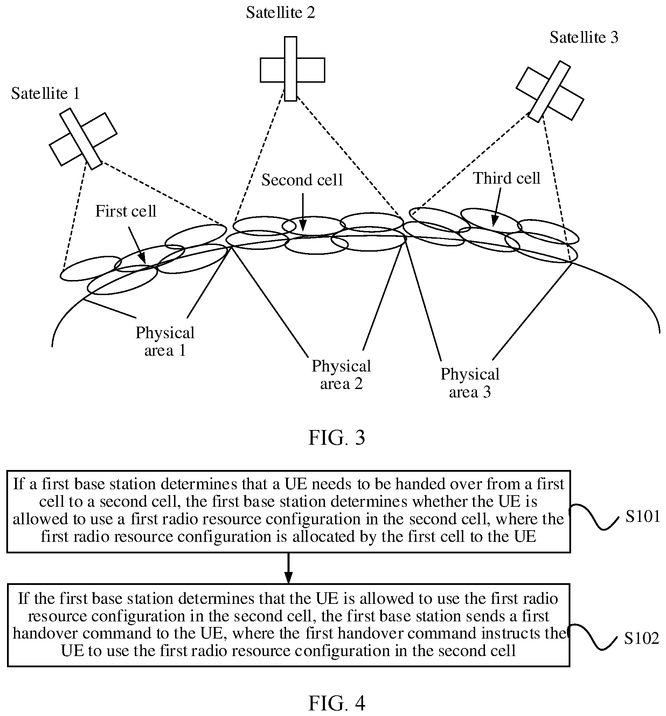

A second deployment scheme is shown in FIG. 3. An identifier of each cell is bound to a satellite. Refer to an example in FIG. 3. A satellite 1 covers a physical area 1, a satellite 2 covers a physical area 2, and a satellite 3 covers a physical area 3. An identifier of a first cell in the physical area 1 covered by the satellite 1 is bound to the satellite 1, an identifier of a second cell in the physical area 2 covered by the satellite 2 is bound to the satellite 2, and an identifier of a third cell in the physical area 3 covered by the satellite 3 is bound to the satellite 3. It may be understood that the identifiers of these cells are scanned in the physical coverage areas as the satellite moves. Assuming that a movement trajectory of the satellite 1 is from covering the physical area 1 to covering the physical area 2, a location of the first cell shown in FIG. 3 corresponds to a location of the second cell currently shown in FIG. 3 as the satellite 1 moves. In other words, even if a UE at the location of the second cell currently shown in FIG. 3 remains stationary, as the satellite 2 moves, a cell that the UE access switches from the second cell to the first cell.

In the two deployment schemes, in the first deployment scheme, the UE frequently performs cell handover due to movement (fast movement) of the UE, or in the second deployment scheme, the UE frequently performs cell handover due to fast movement of the satellite. Both frequent cell handover and radio resource reconfiguration may cause a problem of high network overheads of handover, increasing network load. Especially, for NTN communication, a transmission distance of a signal such as switching signaling and a radio resource configuration is long, causing higher network overheads and higher network load than terrestrial network communication. To resolve this problem, embodiments of this application provide a cell handover method, to reduce network overheads caused by cell handover. In embodiments of this application, an example in which an NTN device is a satellite is used for description. For another NTN device, for example, an airship, refer to implementations of embodiments of this application. Details are not described again.

FIG. 4 is a schematic flowchart of a cell handover method according to an embodiment of this application. As shown in FIG. 4, the method is applied to a first base station. Refer to FIG. 1, serving cells of the first base station 10 include the first cell and the second cell. An example in which the first cell in which a UE is currently located is a source cell, and the second cell to which the UE needs to be handed over is a target cell is used for description. The method includes S101 and S102.

S101: If the first base station determines that the UE needs to be handed over from the first cell to the second cell, the first base station determines whether the UE is allowed to use a first radio resource configuration in the second cell, where the first radio resource configuration is allocated by the first cell to the UE.

Both the first cell and the second cell are the serving cells of the first base station. That a cell is a serving cell of a base station means that the cell is a cell managed or served by the base station.

For example, the UE is in the first cell, and the first cell, that is, the source cell, allocates the first radio resource configuration to the UE. The first base station determines, depending on whether a radio resource that corresponds to the first radio resource configuration and that is in current radio resources of the target cell is an idle radio resource, whether to allow the UE to continue to use the first radio resource configuration in the second cell, that is, the target cell. For example, the radio resource corresponding to the first radio resource configuration is one resource, and is denoted as a radio resource A. If a radio resource that the target cell can currently allocate to the UE, that is, the idle radio resource in the target cell, includes the radio resource A, it is determined that the radio resource A that is the same as that allocated by the source cell can be allocated to the UE, and the UE may continue to use the first radio resource configuration in the target cell. It should be noted that, that the target cell continues to use the first radio resource configuration may also be understood as that the target cell allocates, to the UE, the radio resource corresponding to the first radio resource configuration. For example, a radio resource configuration includes configurations of a radio network temporary identifier (Cell-Radio Network Temporary Identifier, C-RNTI) resource, a sounding reference signal (Sounding Reference Signal, SRS) resource, a physical uplink control channel (Physical Uplink Control Channel, PUCCH) resource, and the like.

S102: If the first base station determines that the UE is allowed to use the first radio resource configuration in the second cell, the first base station sends a first handover command to the UE, where the first handover command instructs the UE to use the first radio resource configuration in the second cell.

For example, if the radio resource in the first radio resource configuration is not occupied by another device, that is, the radio resource in the first radio resource configuration is idle, the UE is allowed to continue to use the first radio resource configuration. The target cell does not need to reallocate a radio resource to the UE, and radio resource reconfiguration does not need to be performed. After receiving the first handover command, the UE may determine, based on that the first handover command does not carry a new radio resource configuration, that the first base station allows the UE to continue to use the first radio resource configuration in the target cell or inherit the first radio resource configuration after the UE is handed over to the target cell. The UE only needs to update a current serving cell to the second cell, for example, replace a PCI of the current serving cell with a PCI of the second cell. In this way, transmission overheads of radio resource reconfiguration are reduced, and network overheads are reduced.

Optionally, the first handover command may be an L1 or L2 handover command. For example, the first handover command is a media access control (Medium Access Control, MAC) layer control element or a physical downlink control channel (Physical Downlink Control Channel, PDCCH).

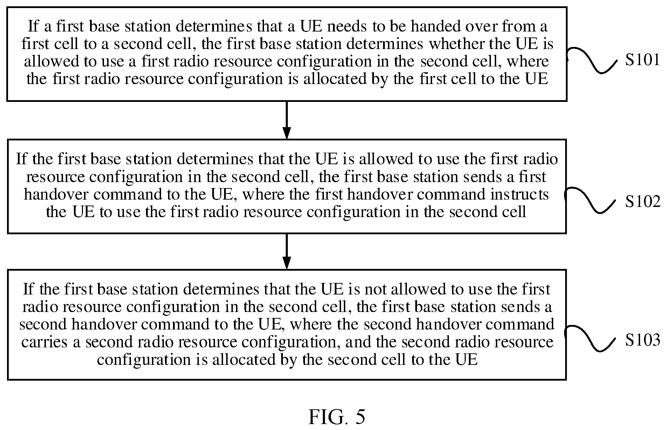

FIG. 5 is a schematic flowchart of another cell handover method according to an embodiment of this application. As shown in FIG. 5, based on FIG. 4, the method further includes S103, and S103 is performed after S101.

S103: If the first base station determines that the UE is not allowed to use the first radio resource configuration in the second cell, the first base station sends a second handover command to the UE, where the second handover command carries a second radio resource configuration, and the second radio resource configuration is allocated by the second cell to the UE.

For example, a radio resource in the first radio resource configuration is a radio resource group, and is referred to as a radio resource A. If the radio resource A in the second cell, that is, the target cell, is completely or partially occupied by another device, the UE is not allowed to continue to use the first radio resource configuration in the target cell. The target cell reallocates a radio resource to the UE, and correspondingly obtains the second radio resource configuration. The first base station generates the second handover command. The second handover command carries the second radio resource configuration. After receiving the second handover command, the UE performs reconfiguration based on the second radio resource configuration.

Optionally, the first base station and the UE may pre-agree on or determine, based on a protocol specification or in another manner, a type of a handover command. For example, if the handover command carries the second radio resource configuration, it indicates that the handover command is the second handover command, indicating that the first base station determines that the UE is not allowed to continue to use the first radio resource configuration in the target cell; or if the handover command does not carry the second radio resource configuration, it indicates that the handover command is the first handover command, indicating that the first base station determines that the UE is allowed to continue to use the first radio resource configuration in a target base station. Whether radio resource reconfiguration needs to be performed is indicated in this manner, so that it is unnecessary to separately indicate whether radio resource reconfiguration needs to be performed. In this way, transmission overheads can be reduced.

Optionally, before receiving the handover command (including the first handover command or the second handover command), the UE may further obtain, from the first cell, that is, the source cell, random configuration information for handover of the UE to the second cell, that is, the target cell, and the UE may access the target cell based on the random configuration information.

Optionally, the second handover command may be an L3 handover command. For example, the second handover command is a radio resource control (Radio Resource Control, RRC) message.

According to the methods in FIG. 4 and FIG. 5, the first base station may further include an identifier of the target cell in the first handover command or the second handover command, to indicate the UE to perform handover from the first cell to the target cell (that is, the second cell). Optionally, the first handover command does not need to carry other information. For example, in a scenario in which both the first cell and the second cell are serving cells of the first base station, the first base station sends the first handover command to the UE, and the UE performs handover to the second cell based on the identifier of the second cell in the first handover command. The UE continues to use the first radio resource configuration in the second cell, and only needs to update a current serving cell to the second cell, for example, replace a PCI of the current serving cell with a PCI of the second cell. Alternatively, the first base station sends the second handover command to the UE, and the UE performs handover to the second cell based on the identifier of the second cell in the second handover command, and performs radio resource reconfiguration based on the second radio resource configuration carried in the second handover command.

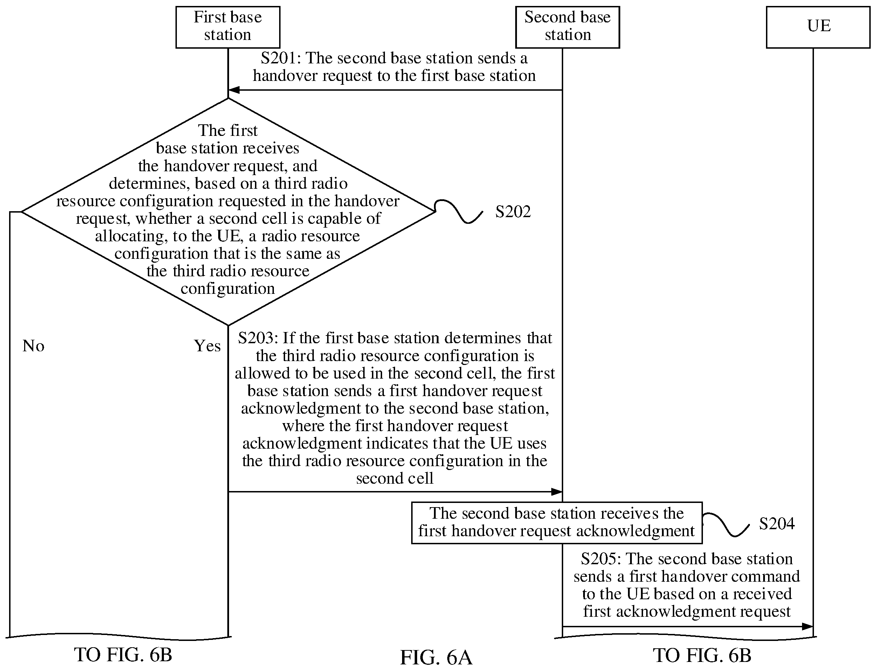

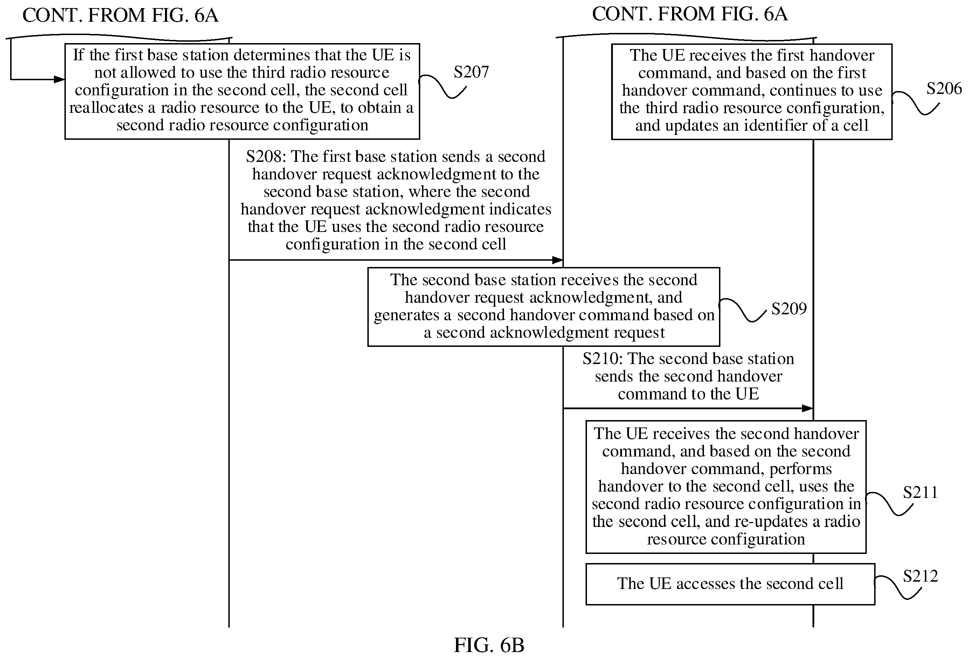

In a possible implementation, the source cell and the target cell belong to a same base station, for example, the first base station described in the foregoing example. In another possible implementation, the source cell and the target cell belong to different base stations. In this embodiment of this application, an example in which a third cell is a serving cell of the second base station, the second cell is a serving cell of the first base station, the UE needs to be handed over from the third cell of the second base station to the second cell, the third cell is the source cell, and the second cell is the target cell is used for description. FIG. 6A and FIG. 6B are a schematic flowchart of another cell handover method according to an embodiment of this application. As shown in FIG. 6A and FIG. 6B, the method is applied to a first base station, a second base station, and a UE. The method includes S201 to S212.

S201: The second base station sends a handover request to the first base station.

A cell currently accessed by the UE is a third cell of the second base station. The UE uses, in the third cell, a third radio resource configuration allocated by the third cell to the UE. If the UE needs to be handed over from the third cell to a second cell, the third cell is considered as a source cell, and the second cell is considered as a target cell. The second base station may send a handover request to the first base station. The handover request is for requesting that the UE continues to use the third radio resource configuration in the second cell.

Optionally, the handover request may carry indication information. The indication information is for requesting to hand over the UE to the second cell, and requesting that the UE needs to continue to use the third radio resource configuration, or requesting that the UE inherits the third radio resource configuration of the third cell.

S202: The first base station receives the handover request, and determines, based on the third radio resource configuration requested in the handover request, whether the second cell is capable of allocating, to the UE, a radio resource configuration that is the same as the third radio resource configuration.

If the second cell is capable of allocating, to the UE, the radio resource configuration that is the same as the third radio resource configuration, step S203 is performed. If the second cell is not capable of allocating, to the UE, the radio resource configuration that is the same as the third radio resource configuration, step S207 is performed.

S203: If the first base station determines that the third radio resource configuration is allowed to be used in the second cell, the first base station sends a first handover request acknowledgment to the second base station, where the first handover request acknowledgment indicates that the UE uses the third radio resource configuration in the second cell.

For example, the first handover request acknowledgment carries indication information, to indicate that the UE uses the third radio resource configuration in the second cell.

Optionally, if the second cell is capable of allocating, to the UE, a radio resource that is the same as a radio resource in the third radio resource configuration, that is, it is determined that the UE is allowed to use the third radio resource configuration in the second cell, the first handover request acknowledgment may indicate that the UE still uses the current third radio resource configuration, or indicate that the UE inherits the third radio resource configuration.

S204: The second base station receives the first handover request acknowledgment.

S205: The second base station sends a first handover command to the UE based on a received first acknowledgment request.

Optionally, the second base station may send an L1 or L2 handover command to the UE as the first handover command, and the first handover command indicates an identifier of the second cell, for example, a PCI of the second cell. The UE is allowed to continue to use the third radio resource configuration, the first handover command does not carry a radio resource configuration (because the radio resource configuration is the same as the third radio resource configuration, and can be inherited), and radio resource reconfiguration does not need to be performed. Therefore, network overheads can be reduced.

In an actual use scenario, for the source base station and the UE, the first handover command is a command that carries a first identifier and indicates the identifier of the second cell. In this embodiment of this application, a distinction is made as follows: when the source cell and the target cell are serving base stations of one base station, the radio resource configuration to be inherited is a first radio resource configuration, and the first handover command instructs the UE to inherit the first radio resource configuration; and when the source cell and the target cell are serving base stations of different base stations, the radio resource configuration to be inherited is the third radio resource configuration, the first handover command instructs the UE to inherit the third radio resource configuration, but this does not indicate that the first handover command is different in different scenarios. For the source base station and the UE, the first handover command instructs the UE to inherit the current radio resource configuration, and a second handover command instructs the UE to perform radio resource reconfiguration based on a radio resource reallocated by the target cell.

S206: The UE receives the first handover command, and based on the first handover command, continues to use the third radio resource configuration, and updates an identifier of a cell.

The third radio resource configuration provided in this embodiment of this application does not include the identifier of the cell, for example, a PCI, where the PCI is indicated by the first identifier carried in the first handover command. Alternatively, the third radio resource configuration includes the identifier of the cell, but after receiving the first handover command, based on the first handover command, the UE continues to use the third radio resource configuration and changes the PCI in the third radio resource configuration to the PCI of the second cell. In this cell handover method, the UE does not need to perform reconfiguration, and only needs to update a PCI of the third cell to the PCI of the second cell. In this way, overheads caused by transmission of configuration signaling in a network are reduced.

S207: If the first base station determines that the UE is not allowed to use the third radio resource configuration in the second cell, the second cell reallocates a radio resource to the UE, to obtain a second radio resource configuration.

Optionally, it is assumed that the radio resource in the third radio resource configuration is referred to as a radio resource B. When the second cell allocates a radio resource to the UE, if a part or all of the radio resource B of the second cell is occupied, the first base station determines that the UE is not allowed to use the third radio resource configuration in the second cell. The second cell reallocates a radio resource to the UE based on a currently idle radio resource, to obtain the second radio resource configuration. For example, the second radio resource configuration generated by the second cell may be an RRC reconfiguration message or the like.

S208: The first base station sends a second handover request acknowledgment to the second base station, where the second handover request acknowledgment indicates that the UE uses the second radio resource configuration in the second cell.

For example, the second handover request acknowledgment carries indication information, to indicate that the UE does not use the third radio resource configuration in the second cell.

The second handover request acknowledgment carries the second radio resource configuration.

S209: The second base station receives the second handover request acknowledgment, and generates the second handover command based on a second acknowledgment request.

The second handover command instructs the UE to use the second radio resource configuration in the second cell.

S210: The second base station sends the second handover command to the UE.

For example, the second handover command carries the second radio resource configuration and the identifier of the second cell, and the identifier may be a PCI.

S211: The UE receives the second handover command, and based on the second handover command, performs handover to the second cell, uses the second radio resource configuration in the second cell, and re-updates the radio resource configuration.

In the scenario provided in this example, the current cell is the third cell.

S212 is performed after S206 and S211.

S212: The UE accesses the second cell.

Optionally, before receiving a handover command (including the first handover command or the second handover command), the UE may obtain, from the third cell of the second base station, random configuration information for handover of the UE to the second cell, and the UE may access the second cell based on the random configuration information and the handover command.

Optionally, the UE may alternatively access the second cell based on the handover command in a random access-free manner.

For example, the handover command may be the first handover command or the second handover command, the handover command carries the first identifier, and the first identifier indicates the identifier of the second cell, for example, the PCI of the second cell.

According to the cell handover method provided in this embodiment of this application, if the first base station determines that the UE is allowed to continue to use, in the target cell, that is, the second cell, the third radio resource configuration allocated by the third cell to the UE, the UE only needs to update a PCI of the source cell to a PCI of the target cell based on the PCI of the target cell indicated by the handover command, to continue communication, and does not need to perform radio resource reconfiguration during cell handover. In this way, overheads incurred between devices in the network due to radio resource reconfiguration can be reduced.

The cell handover methods provided in embodiments of this application may be applied to satellite communication scenarios in the following examples. The satellite communication scenario includes a transparent architecture and a regenerative architecture. In the transparent architecture, a base station is located on the ground after a gateway, and a satellite mainly functions as a relay, and can perform radio frequency (RF) processing, for example, frequency conversion, amplification, and beam management. In the regenerative architecture, a satellite hosts an entire base station or a part of functions of the base station. For example, a data packet may be decoded and processed on the satellite. Because of a capability of supporting an inter-satellite link (Inter-Satellite Link, ISL), the regenerative architecture is more flexible and provides wider coverage and better performance. In embodiments of this application, several satellite communication scenarios are described as example, to correspondingly describe functions of a satellite in the foregoing cell handover methods. However, these scenarios are merely examples, and do not constitute a limitation.

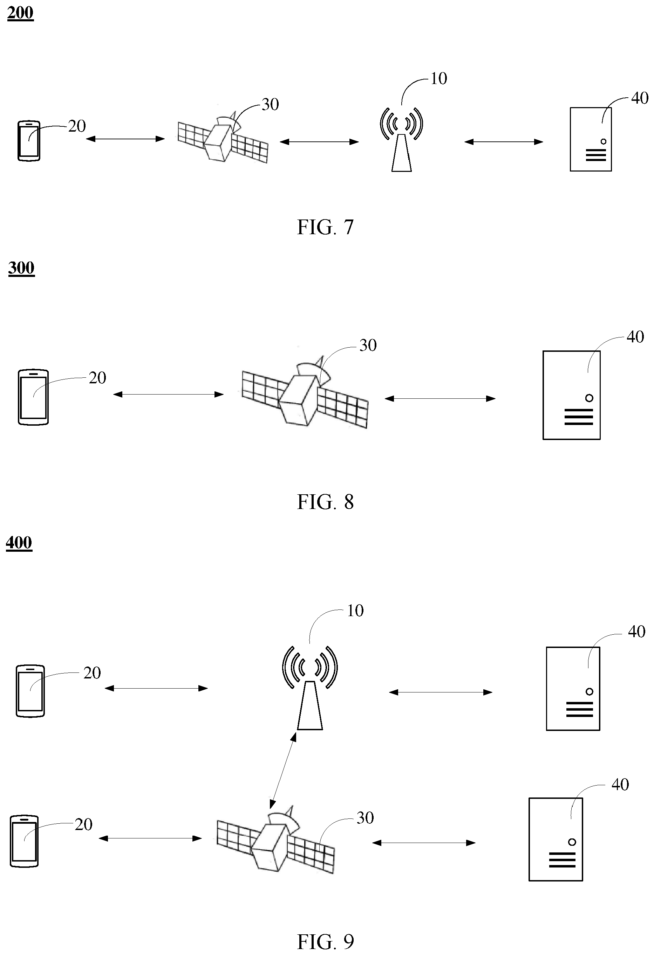

FIG. 7 is a diagram of a transparent architecture of a satellite communication network according to an embodiment of this application. As shown in FIG. 7, the architecture 200 includes a base station 10, a UE 20, a satellite 30, and a core network device 40. The architecture 200 is a transparent (transparent) satellite architecture. A function of the satellite 30 includes radio frequency filtering (Radio Frequency Filtering) and frequency conversion and amplification (Frequency Conversion And Amplification). In other words, the satellite 30 mainly functions as an L1 relay (relay) to regenerate a physical layer signal, and there is no other higher protocol layer. In other words, in the cell handover methods provided in embodiments of this application, the satellite 30 may be used as L1 of a base station (including either or both of the first base station and the second base station in the foregoing examples) to implement transmission.

FIG. 8 is a diagram of a regenerative architecture of a satellite communication network according to an embodiment of this application. As shown in FIG. 8, the architecture 300 includes a UE 20, a satellite 30, and a core network device 40. The regenerative architecture 300 does not include a regenerative satellite with an ISL, and the satellite 30 has a processing function of a base station. In other words, in the cell handover methods provided in embodiments of this application, the satellite 30 may be used as a base station (including either or both of the first base station and the second base station in the foregoing examples).

FIG. 9 is a diagram of another regenerative architecture of a satellite communication network according to an embodiment of this application. As shown in FIG. 9, the regenerative architecture includes a base station 10, a UE 20, a satellite 30, and a core network device 40. The regenerative architecture 400 has an ISL, and the satellite 30 has a processing function of a base station. In other words, in the cell handover methods provided in embodiments of this application, the satellite 30 may be used as a base station (including either or both of the first base station and the second base station in the foregoing examples).

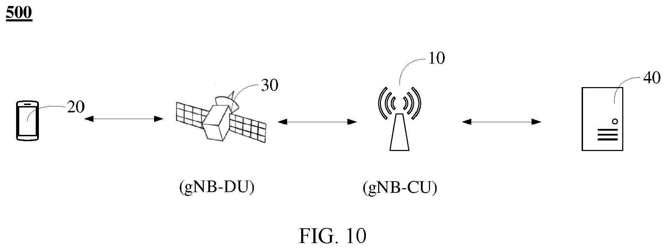

FIG. 10 is a diagram of another regenerative architecture of a satellite communication network according to an embodiment of this application. As shown in FIG. 10, the regenerative architecture includes a base station 10, a UE 20, a satellite 30, and a core network device 40. The regenerative architecture 500 has an ISL, and the satellite 30 has a DU processing function of a base station (gNB), and is shown as a gNB-DU in FIG. 10. In other words, in the cell handover methods provided in embodiments of this application, the satellite 30 may be used as a base station (including either or both of the first base station and the second base station in the foregoing examples) to implement the DU processing function. The base station 10 implements a CU processing function of a base station, and is shown as a gNB-CU in FIG. 10.

Optionally, the architecture of the satellite communication network may alternatively be an architecture in which a satellite has a new networking architecture capability (Integrated Access And Backhaul, IAB) of the base station. In other words, in the cell handover methods provided in embodiments of this application, the satellite 30 may be used as IAB of a base station, to provide wider network coverage and a better capacity.

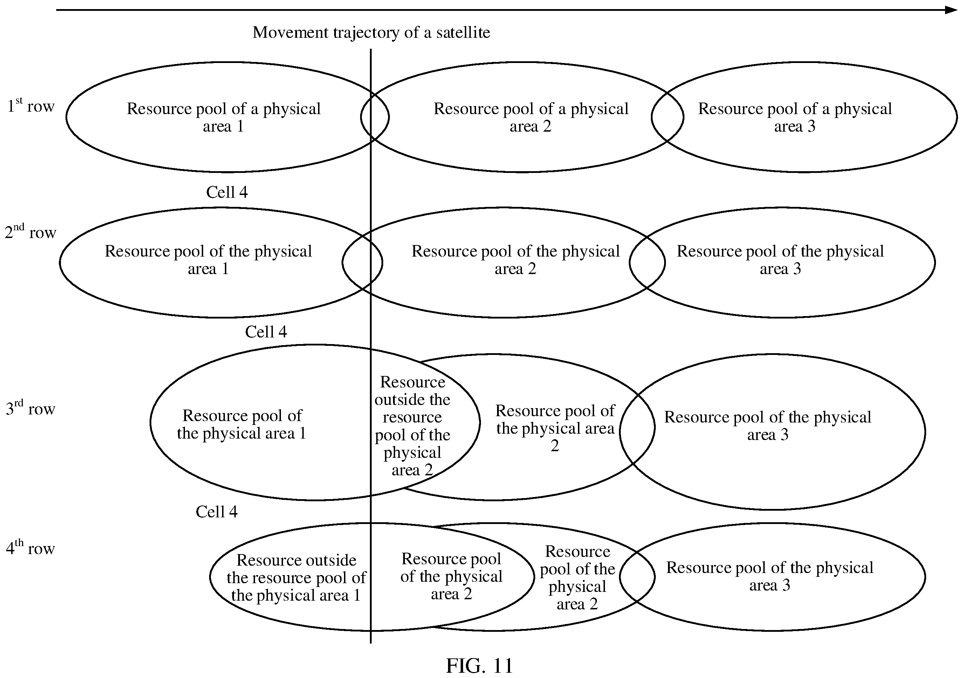

FIG. 11 is a schematic flowchart of another cell handover method according to an embodiment of this application. As shown in FIG. 11, the method is based on the method provided in FIG. 6A and FIG. 6B, and is applied to a first base station, a second base station, and a UE. The method is performed before S201, and further includes S213 to S216.

S213: The second base station sends, to the first base station, a negotiation request for radio resource allocation, where the negotiation request indicates a resource allocation rule.

Optionally, the first base station may send the negotiation request to the second base station, to indicate the resource allocation rule. In this embodiment of this application, an example in which the second base station sends the negotiation request to the first base station is used for description, and does not constitute a limitation.

For example, a resource pool of each cell may include a plurality of types of radio resources, for example, a C-RNTI resource, an SRS resource, and a PUCCH resource. Each cell may divide these radio resources into a plurality of resource groups. In this embodiment of this application, an example in which quantities of resource groups obtained through division in the cells are the same is used. For example, each cell includes five resource groups, 100 resource groups, or the like, and each resource group may include radio resources of a same type, or may include radio resources of different types (for example, including a plurality of types of radio resources).

Different resource allocation rules may be determined based on requirements of actual use scenarios. Examples are as follows.

### Example 1: The resource allocation rule is a rule set based on each cell.

In a possible implementation, the resource allocation rule may be set based on cells in a direction of a satellite movement orbit. Refer to FIG. 4. A cell 1 is a serving cell of a satellite 1, and a cell 2 is a serving cell of a satellite 2. It is assumed that a UE 1 is stationary in the cell 2. When a satellite moves, a movement trajectory of the satellite is from a position of the satellite 1 to a position of the satellite 2, and the UE 1 needs to be handed over from the cell 1 to the cell 2. It is assumed that each cell has five groups of resources that can be allocated to a UE. In a sequence of the cells in the direction of the satellite movement orbit, each cell uses a corresponding priority sequence for radio resource allocation. For example, the five groups of resources are respectively denoted as a resource group 1, a resource group 2, a resource group 3, a resource group 4, and a resource group 5. In this case, a resource allocation rule of the cell 1 is that an allocation sequence in descending order of priorities is: the resource group 2, the resource group 3, the resource group 4, the resource group 5, and the resource group 1. A resource allocation rule of the cell 2 is that an allocation sequence in descending order of priorities is: the resource group 1, the resource group 2, the resource group 3, the resource group 4, and the resource group 5. When the cell 2 has allocated the resource group 1 to the UE 1, and the UE 1 has performed radio resource configuration, for example, a first radio resource configuration, before the satellite 1 moves to cover the UE, the cell 1 may provide a radio resource for another UE, and preferentially and sequentially allocate, according to the resource allocation rule of the cell 1, radio resources of the resource group 2, the resource group 3, and the resource group 4 to the another UE, for example, a UE 2, a UE 3, and a UE 4; and when the satellite 1 moves and the UE 1 needs to access the cell 1, if the resource group 1 of the cell 1 is idle, the resource group 1 is allocated to the UE 1, and the UE 1 may inherit the first radio resource configuration. In resource allocation rules of the cells on the movement trajectory of the satellite, the resource groups have different priority sequences. Therefore, when the UE performs cell handover, a radio resource allocated to the UE is more likely to be idle. In this way, a probability of inheriting a radio resource configuration can be increased.

In a possible implementation, the resource allocation rule may be set based on a PCI of each cell. It is assumed that there are N cells in total. The PCI of each cell is represented by I (generally, PCIs of two neighboring cells are different). The resource allocation rule may be that a resource group with a highest priority in each cell is a resource group with I mod N=a (for example, a=0), that is, each cell preferentially uses a resource group with I mod N=a. If the resource group is occupied, a resource group with I mod N=a+1 is used, and so forth. In this embodiment of this application, an example in which each cell has five groups of resources that can be allocated to the UE, and the five groups of resources are respectively denoted as a resource group 1, a resource group 2, a resource group 3, a resource group 4, and a resource group 5 is still used. For example, a cell with I=i is a cell 3, a resource group with a highest priority in the cell 3 is a resource group with I mod 5=0, and a resource group 1 has a highest priority. After sequential calculation, it is assumed that an allocation sequence in descending order of priorities of resource groups of the cell with PCI=i, that is, the cell 3, is: a resource group 1, a resource group 2, a resource group 3, a resource group 5, and a resource group 4. According to this calculation method, for each cell, an allocation sequence in descending order of priorities can be correspondingly calculated based on the PCI. Because PCIs of neighboring cells are different, calculated allocation sequences in descending order of priorities may also be different. Therefore, with reference to the foregoing example, when the UE performs cell handover, (usually to a neighboring cell), in a target cell, the radio resource allocated by a source cell to the UE is more likely to be idle. In this way, a possibility of inheriting a radio resource configuration can be increased.

### Example 2: The resource allocation rule is a rule set based on each physical area.

It is assumed that there are three physical areas, which are respectively denoted as a physical area 1, a physical area 2, and a physical area 3, on a movement trajectory of a satellite, and each physical area corresponds to a cell. A corresponding priority sequence for radio resource allocation is set for each physical area. For example, a resource pool of each physical area includes five groups of resources, which are respectively denoted as a resource group 1, a resource group 2, a resource group 3, a resource group 4, and a resource group 5. In this case, a resource allocation rule of the physical area 1 is that an allocation sequence in descending order of priorities is: the resource group 2, the resource group 3, the resource group 4, the resource group 5, and the resource group 1; a resource allocation rule of the physical area 2 is that an allocation sequence in descending order of priorities is: the resource group 1, the resource group 2, the resource group 3, the resource group 4, and the resource group 5; and a resource allocation rule of the physical area 3 is that an allocation sequence in descending order of priorities is: the resource group 3, the resource group 4, the resource group 5, the resource group 1, and the resource group 2.

In a possible implementation, in the deployment scenario in FIG. 3 in which an identifier of each cell is bound to a physical area, for example, the physical area 1 corresponds to a cell 1, the physical area 2 corresponds to a cell 2, and the physical area 3 corresponds to the cell 3, it is equivalent to that a resource allocation rule of the cell 1 is that an allocation sequence in descending order of priorities is: the resource group 2, the resource group 3, the resource group 4, the resource group 5, and the resource group 1; a resource allocation rule of the cell 2 is that an allocation sequence in descending order of priorities is: the resource group 1, the resource group 2, the resource group 3, the resource group 4, and the resource group 5; and a resource allocation rule of the cell 3 is that an allocation sequence in descending order of priorities is: the resource group 3, the resource group 4, the resource group 5, the resource group 1, and the resource group 2.

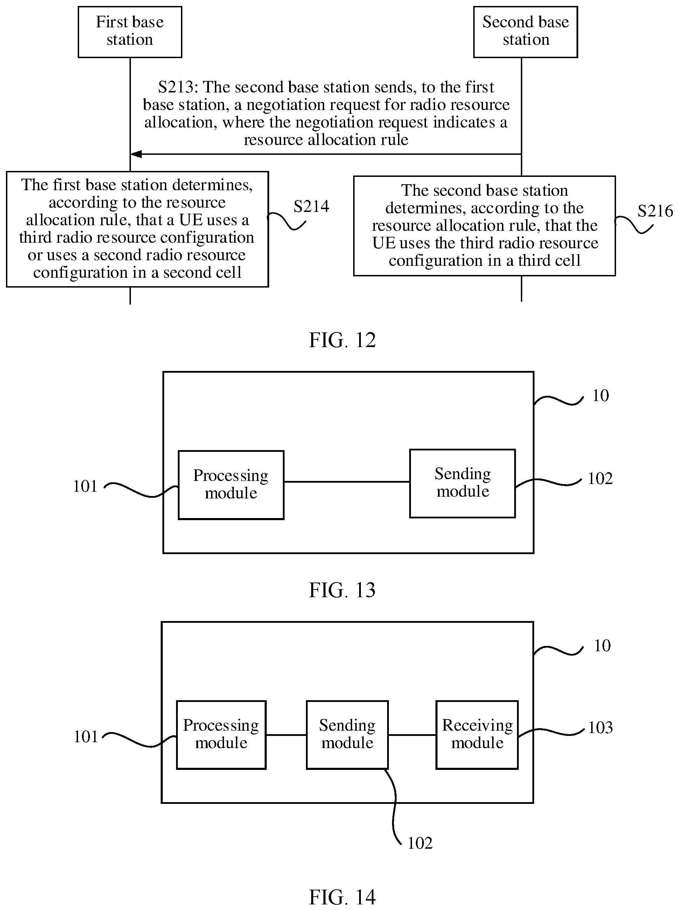

In a possible implementation, in the deployment scenario in FIG. 4 in which an identifier of each cell is bound to a satellite, when the satellite moves, and a cell of the satellite, for example, a cell 4, corresponds to the physical area 1, as shown in a 1^{st} row and a 2^{nd} row in FIG. 12, a resource allocation rule of the cell 4 is that an allocation sequence in descending order of priorities is: the resource group 2, the resource group 3, the resource group 4, the resource group 5, and the resource group 1, and when the satellite moves, and the cell 4 corresponds to the physical area 2, a resource allocation rule of the cell 4 is that an allocation sequence in descending order of priorities is: the resource group 1, the resource group 2, the resource group 3, the resource group 4, and the resource group 5. Further, during movement of the satellite, a case in which a part of the cell 4 is in the physical area 1 and a part of the cell 4 is in the physical area 2 may exist. In this case, a time point T may be set. Before the time point, the cell 4 correspondingly keeps using a resource allocation rule for a resource pool of the physical area 1. As the satellite moves, the resource allocation rule of the cell 4 may change. Using a 3^{rd} row and a 4^{th} row in FIG. 12 as an example, when a small part of the cell 4 moves to the physical area 2 and most of the cell 4 is in the physical area 1, that is, in a scenario of the 3^{rd} row, the resource allocation rule may be that the cell 4 allocates a radio resource to a UE on a left side (for example, of a vertical line in FIG. 12) in an allocation sequence in descending order of priorities of the resource groups in the resource pool of the physical area 1, and allocates a radio resource outside the resource pool of the physical area 2 to the UE on a right side (for example, of the vertical line in FIG. 12). From the time point T, to be specific, from a time point that a half of the cell 4 moves to the physical area 2 and the other half of the cell 4 is in the physical area 1, that is, in a scenario of the 4^{th} row, the resource allocation rule may be that the cell 4 allocates a radio resource outside the resource pool of the physical area 1 to the UE on the left side (for example, of the vertical line in FIG. 12), and allocates a radio resource to the UE on the right side (as shown by the vertical line in FIG. 12) in an allocation sequence in descending order of priorities of the resource groups in the resource pool of the physical area 2. The allocation method in FIG. 12 is merely an example. In this embodiment of this application, priority sequences of resource groups in two adjacent physical areas are different, and when the satellite moves to different physical areas, the resource allocation rules corresponding to cells bound to the satellite are also different, so that when the UE performs cell handover, a radio resource allocated to the UE is more likely to be idle. In this way, a possibility that the UE inherits a radio resource configuration can be increased.

### Example 3: The resource allocation rule may be randomly allocated.

This embodiment of this application further provides a resource allocation rule. For example, if each cell includes five resource groups, each cell may randomly obtain a priority sequence of the resource groups. The resource allocation rule obtained by using this random allocation method can effectively avoid a case in which radio resources are allocated to each cell in ascending order of numbers of the resource groups. If the cells uniformly allocate radio resources in ascending order, a cell 1 preferentially allocates a resource group 1 to a UE 1 when the UE 1 accesses the cell 1, and a cell 2 also allocates the resource group 1 to the UE 1 when the UE 2 accesses the cell 2. In this case, if the UE 1 needs to access the cell 2, the resource group 1 is occupied by the UE 2, and the UE 1 cannot use the resource group 1 or inherit a radio resource configuration of the resource group 1. Therefore, the random allocation causes the sequences of allocating the resource groups to the UE by the cell to be possibly different, so that a possibility that the radio resource that needs to be inherited is occupied is reduced, and a possibility that the UE inherits a radio resource configuration is increased.

In the resource allocation rules in the foregoing examples in this embodiment of this application, only the priority sequence of the resource groups in the resource pool is listed. In an actual use scenario, each cell may still use another radio resource outside the resource pool. In other words, for a cell, radio resources that can be used by the cell are still all radio resources. In this embodiment of this application, only allocation priorities of the radio resources are specified. Optionally, radio resources outside the resource pool may be sorted in a priority sequence with reference to the foregoing examples, allocated in the priority sequence, and so on. Details are not described in this embodiment of this application again. For example, the priorities for the resource pool are: the resource group 1, the resource group 2, the resource group 3, the resource group 4, and the resource group 5. After the radio resources in the resource group 1 are occupied or used up, the cell may preferentially use the resources in the resource group 2; after the radio resources in the resource group 2 are occupied or used up, the cell preferentially uses the radio resources in the resource group 3; and so on.

S214: The first base station determines, according to the resource allocation rule, that the UE uses a third radio resource configuration or uses a second radio resource configuration in the second cell.

In the method shown in FIG. 6A and FIG. 6B, the radio resource in the third radio resource configuration is a radio resource B. If the second cell of the first base station may determine, according to the resource allocation rule determined based on the negotiation request, that the radio resource B in the radio resource corresponding to the second cell is idle, it is determined that the UE uses the third radio resource configuration in the second cell. If the second cell of the first base station may determine, according to the resource allocation rule determined based on the negotiation request, that the radio resource B in the radio resource corresponding to the second cell is occupied, a resource group used by the UE in the second cell is determined according to the resource allocation rule in the foregoing examples, to allocate the resource group to the UE and obtain the second radio resource configuration.

S215: The second base station determines, according to the resource allocation rule, that the UE uses the third radio resource configuration in a third cell.

Before S215, the first base station sends a handover request to the second base station, to request to hand over the UE to the third cell. For the method, refer to the descriptions in FIG. 6A and FIG. 6B. Details are not described herein again.

Optionally, in the scenario shown in FIG. 6A and FIG. 6B, the second base station may determine, according to the resource allocation rule, that the UE uses the third radio resource configuration in the third cell. If the third cell of the second base station determines, according to the resource allocation rule determined based on the negotiation request, that the radio resource B in the radio resources corresponding to the third cell is idle, the radio resource of the third radio resource configuration is the radio resource B.

Based on the negotiation request provided in this embodiment of this application, base stations of all cells can obtain a same resource allocation rule through negotiation, and each cell allocates a radio resource to the UE according to the resource allocation rule, so that it is more likely to obtain a same radio resource configuration. In this way, a possibility of inheriting the third radio resource can be increased during cell handover, thereby reducing network overheads.

In a possible implementation, based on the cell handover method provided in FIG. 4 or FIG. 5, the first cell may determine, according to a resource allocation rule pre-stored by the first base station, that the UE uses the first radio resource configuration in the first cell, and the second cell may determine, according to the resource allocation rule pre-stored by the first base station, that the UE uses the first radio resource configuration or uses the second radio resource configuration in the second cell. For the method, refer to the example in S214 (in S214, an example in which the UE uses the third radio resource configuration or uses the second radio resource configuration in the second cell is used). Details are not described again.

Based on the pre-stored resource allocation rule provided in this embodiment of this application, each cell can allocate a radio resource to the UE according to a same resource allocation rule, so that it is more likely to obtain a same radio resource configuration. In this way, a possibility of inheriting the first radio resource can be increased during cell handover, thereby reducing network overheads.

FIG. 13 is a diagram of a structure of a first base station according to an embodiment of this application. As shown in FIG. 13, the first base station 10 includes a processing module 101 and a sending module 102.

The first base station provided in FIG. 13 may be used in a scenario in which both a source cell and a target cell are serving cells of the first base station, and an identifier of the target cell is different from an identifier of the source cell, where the source base station is a first cell, and a target base station is a second cell.

The processing module 101 is configured to: if it is determined that a UE needs to be handed over from the first cell to the second cell, determine whether the UE is allowed to use a first radio resource configuration in the second cell, where the first radio resource configuration is allocated by the first cell to the UE.

For example, both the first cell and the second cell may be the serving cells of the first base station.

The sending module 102 is configured to: if the processing module 101 determines that the UE is allowed to use the first radio resource configuration in the second cell, send a first handover command to the UE, where the first handover command instructs the UE to use the first radio resource configuration in the second cell.

In a possible implementation, the sending module 102 is further configured to: if the processing module 101 determines that the UE is not allowed to use the first radio resource configuration in the second cell, send a second handover command to the UE, where the second handover command carries a second radio resource configuration, and the second radio resource configuration is allocated by the second cell to the UE.

In a possible implementation, based on the scenario provided in FIG. 13, the processing module 101 is specifically configured to determine, according to a pre-stored resource allocation rule, that the UE uses the first radio resource configuration or uses the second radio resource configuration in the second cell.

It should be understood that the modules shown in FIG. 13 are merely examples. With reference to the method parts in embodiments of this application, the processing module 101 and the sending module 102 may perform operations thereof or perform variations of the operations thereof.

FIG. 14 is a diagram of another structure of a first base station according to an embodiment of this application. As shown in FIG. 14, the first base station 10 further includes a receiving module 103. The first base station provided in FIG. 14 may be used in a scenario in which a target cell is a second cell of the first base station, a source cell is a third cell of a second base station, and an identifier of the target cell is different from an identifier of the source cell.

The receiving module 103 is configured to receive a handover request, where the handover request is sent by the second base station when a UE needs to be handed over from the third cell of the second base station to the second cell, the handover request is for requesting that the UE uses a third radio resource configuration in the second cell, and the third radio resource configuration is allocated by the third cell to the UE.

The sending module 102 is further configured to: if the processing module 101 determines that the UE is allowed to use the third radio resource configuration in the second cell, send a first handover request acknowledgment to the second base station, where the first handover request acknowledgment indicates that the UE uses the third radio resource configuration in the second cell, so that the second base station sends a first handover command to the UE.

The sending module 102 is further configured to: if the processing module 101 determines that the UE is not allowed to use the third radio resource configuration in the second cell, send a second handover request acknowledgment to the second base station, where the second handover request acknowledgment indicates that the UE uses a second radio resource configuration in the second cell, so that the second base station sends a second handover command to the UE.

In a possible implementation, in the scenario shown in FIG. 14, the first handover command may instruct the UE to inherit the third radio resource configuration. For example, the first handover command carries a first identifier, to indicate the identifier of the second cell. When receiving a handover command with only the first identifier, the UE can know that a current radio resource configuration, that is, the third radio resource configuration can be continued to be used. The second handover command may carry the second radio resource configuration and the first identifier. If the UE receives the second radio resource configuration and the first identifier, the UE knows that reconfiguration needs to be performed based on the second radio resource configuration, and updates an identifier of a current cell based on an indication of the first identifier.

In a possible implementation, based on the scenario provided in FIG. 14, the first base station and the second base station may first negotiate to determine a resource allocation rule, and both allocate a radio resource to the UE based on a priority sequence in the resource allocation rule. For a method, refer to the foregoing embodiments.

The receiving module 103 is further configured to receive a negotiation request sent by the second base station, where the negotiation request indicates the resource allocation rule.

The processing module 101 is further configured to determine, according to the resource allocation rule, that the UE uses the third radio resource configuration or uses the second radio resource configuration in the second cell.

It should be understood that the modules shown in FIG. 14 are merely examples. With reference to the method parts in embodiments of this application, the processing module 101, the sending module 102, and the receiving module 103 may perform operations thereof or perform variations of the operations thereof.

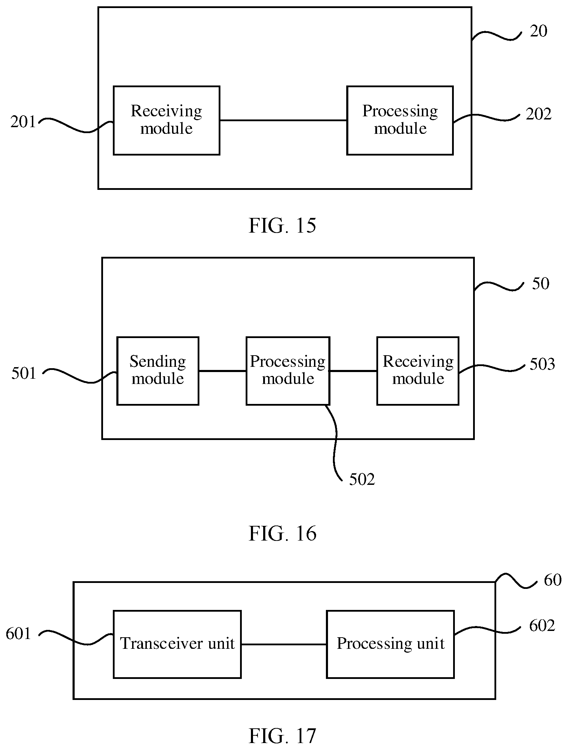

FIG. 15 is a diagram of a structure of a UE according to an embodiment of this application. As shown in FIG. 15, the UE 20 includes a receiving module 201 and a processing module 202.

The receiving module 201 is configured to receive a first handover command, where the first handover command instructs the UE to use a first radio resource configuration in a second cell, the first radio resource configuration is allocated by a first cell to the UE, and both the first cell and the second cell are serving cells of a first base station.

The processing module 202 is configured to: based on the first handover command, perform handover from the first cell to the second cell, and use the first radio resource configuration in the second cell.

In a possible implementation, the receiving module 201 is further configured to receive a first handover command, where the first handover command further instructs the UE to use a third radio resource configuration in the second cell, the third radio resource configuration is allocated by a third cell to the UE, and the third cell is a serving cell of a second base station. The processing module 202 is further configured to: based on the first handover command, perform handover from the third cell to the second cell, and use the third radio resource configuration in the second cell.

In a possible implementation, the handover command carries an identifier of the second cell, and the handover command includes the first handover command, a second handover command, or the first handover command. The processing module 202 is further configured to update, based on to the handover command, an identifier of a current cell to the identifier of the second cell.

It should be understood that the modules shown in FIG. 15 are merely examples. With reference to the method parts in embodiments of this application, the receiving module 201 and the processing module 202 may perform operations thereof or perform variations of the operations thereof.

FIG. 16 is a diagram of a structure of a second base station according to an embodiment of this application. As shown in FIG. 16, the second base station 50 includes a sending module 501, a processing module 502, and a receiving module 503.

The second base station 50 provided in FIG. 16 may be used in a scenario in which a target cell is a second cell of a first base station, a source cell is a third cell of the second base station, and an identifier of the target cell is different from an identifier of the source cell. For the first base station, refer to the first base station 10 provided in FIG. 14.

The sending module 501 is configured to: if the processing module 502 determines that a UE needs to be handed over from the third cell to the second cell, send a handover request to the first base station, where the handover request is for requesting that the UE uses a third radio resource configuration in the second cell, the third radio resource configuration is allocated by the third cell to the UE, the third cell is a serving cell of the second base station, and the second cell is a serving cell of the first base station.

The sending module 501 is further configured to: if the receiving module 503 receives a first handover request acknowledgment, send a first handover command to the UE, where the first handover request acknowledgment indicates, to the second base station, that the UE uses the third radio resource configuration in the second cell, and the first handover command instructs the UE to use the third radio resource configuration in the second cell.

In a possible implementation, the sending module 501 is further configured to: if the receiving module 503 receives a second handover request acknowledgment, send a second handover command to the UE, where the second handover request acknowledgment indicates, to the second base station, that the UE uses a second radio resource configuration in the second cell, the second handover command carries the second radio resource configuration, and the second radio resource configuration is allocated by the second cell to the UE.

In a possible implementation, the handover command carries an identifier of the second cell, to instruct the UE to update an identifier of a current cell to the identifier of the second cell, where the handover command includes the first handover command or the second handover command.

In a possible implementation, the sending module 501 is further configured to send a negotiation request to the first base station, where the negotiation request indicates a resource allocation rule.

The processing module 502 is further configured to determine, according to the resource allocation rule, that the UE uses the third radio resource configuration in the third cell.

It should be understood that the modules shown in FIG. 16 are merely examples. With reference to the method parts in embodiments of this application, the sending module 501, the processing module 502, and the receiving module 503 may perform operations thereof or perform variations of the operations thereof.

In addition, FIG. 17 is a diagram of a structure of a device 60 according to an embodiment of this application. The device 60 shown in FIG. 17 includes a transceiver unit 601 and a processing unit 602. The device 60 may be configured to perform S101 and S102, S101 to S103, S201 to S212, or S213 to S216 in the methods in the foregoing embodiments. When the device 60 is configured to perform the methods in the foregoing embodiments, the device 60 is equivalent to the first base station, the UE, or the second base station in the methods.

It should be noted that, in embodiments of this application, division into the units is an example, and is merely a logical function division. In actual implementation, another division manner may be used. Functional units in embodiments of this application may be integrated into one processing unit, or each of the units may exist alone physically, or two or more units may be integrated into one unit. For example, in the foregoing embodiment, the transceiver unit 601 and the processing unit 602 may be a same unit, or may be different units; and the transceiver unit 601 and the processing unit 602 may be a same unit, or may be different units. The integrated unit may be implemented in a form of hardware, for example, a chip, or may be implemented in a form of a software functional unit.

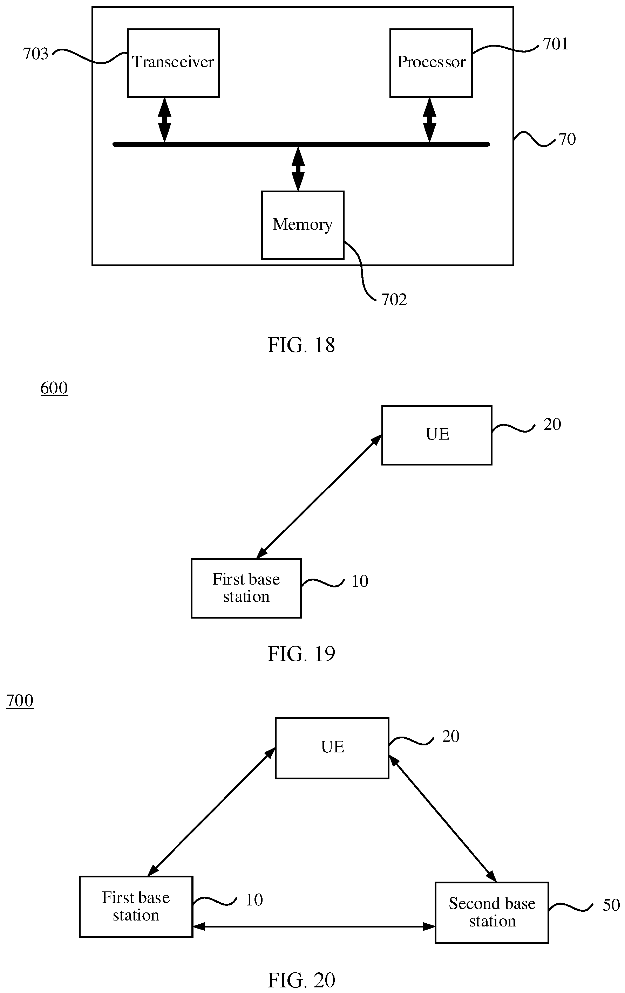

In addition, an embodiment of this application further provides a device 70. FIG. 18 is a diagram of a structure of a device 70 according to an embodiment of this application. The device 70 may include a processor 701, a memory 702 coupled to the processor 701, and a transceiver 703. The transceiver 703 may be a communication interface, an optical module, or the like, and is configured to receive a packet, data information, or the like. The processor 701 may be a central processing unit (Central Processing Unit, CPU), a network processor (Network Processor, NP), or a combination of a CPU and an NP, and is configured to perform steps related to forwarding processing in the device described in the examples in the foregoing embodiments. The processor may alternatively be an application-specific integrated circuit (Application-Specific Integrated Circuit, ASIC), a programmable logic device (Programmable Logic Device, PLD), or a combination thereof. The PLD may be a complex programmable logic device (Complex Programmable Logic Device, CPLD), a field-programmable gate array (Field-Programmable Gate Array, FPGA), generic array logic (Generic Array Logic, GAL), or any combination thereof. The processor 701 may be one processor, or may include a plurality of processors. The memory 702 may include a volatile memory (volatile memory), for example, a random access memory (Random Access Memory, RAM). The memory may alternatively include a non-volatile memory (non-volatile memory), for example, a read-only memory (Read-Only Memory, ROM), a flash memory (flash memory), a hard disk drive (Hard Disk Drive, HDD), or a solid-state drive (Solid-State Drive, SSD). The memory 702 may alternatively include a combination of the foregoing types of memories. The memory 702 may be one memory, or may include a plurality of memories, and is configured to store program instructions. In an implementation, the memory 702 stores computer-readable instructions, and the computer-readable instructions include a plurality of software modules, for example, a sending module, a radio resource control module, and a receiving module. After executing each software module, the processor 701 may perform a corresponding operation based on an indication of each software module. In this embodiment, an operation performed by a software module is actually an operation performed by the processor 701 based on the indication of the software module. Optionally, the processor 701 may alternatively store program code or instructions for performing the solutions in embodiments of this application. In this case, the processor 701 does not need to read the program code or the instructions from the memory 702.

The device 70 may be configured to perform the methods in the foregoing embodiments. Specifically, the device 70 may be used as a first base station to perform operations S101 and S102, S101 to S103, S201 to S212, or S213 to S216 in the methods. For example, the processor 702 may be configured to: if it is determined that a UE needs to be handed over from a first cell to a second cell, determine whether the UE is allowed to use a first radio resource configuration in the second cell, where the first radio resource configuration is allocated by the first cell to the UE, and both the first cell and the second cell are serving cells of the first base station. The communication interface 701 may be configured to: if the UE is allowed to use the first radio resource configuration in the second cell, send a first handover command to the UE, where the first handover command instructs the UE to use the first radio resource configuration in the second cell.

Alternatively, the device 70 may be used as a UE to perform operations S201 to S212 or S213 to S216 in the methods. For example, the communication interface 701 is configured to receive a first handover command, where the first handover command instructs the UE to use a first radio resource configuration in a second cell, the first radio resource configuration is allocated by a first cell to the UE, and both the first cell and the second cell are serving cells of a first base station. The processor 702 is configured to: based on the first handover command perform handover from the first cell to the second cell, and use the first radio resource configuration in the second cell.

Alternatively, the device 70 may be used as a second base station to perform operations S201 to S212 or S213 to S216 in the methods. For example, the communication interface 701 is configured to: if the processor 702 determines that a UE needs to be handed over from a third cell to a second cell, send a handover request to a first base station, where the handover request is for requesting that the UE uses a third radio resource configuration in the second cell, the third radio resource configuration is allocated by the third cell to the UE, the third cell is a serving cell of the second base station, and the second cell is a serving cell of the first base station; and if a first handover request acknowledgment is received, send a first handover command to the UE, where the first handover request acknowledgment indicates, to the second base station, that the UE uses the third radio resource configuration in the second cell, and the first handover command instructs the UE to use the third radio resource configuration in the second cell.

An embodiment of this application further provides a system. FIG. 19 is a diagram of a structure of a system 600 according to an embodiment of this application. The system 600 may include a first base station 10 and a UE 20. For a structure of the first base station 10, refer to FIG. 13, FIG. 17, and FIG. 18. For a structure of the UE 20, refer to FIG. 14, FIG. 17, and FIG. 18. With reference to the method parts in embodiments of this application, the system 600 may perform operations thereof or perform variations of the operations thereof. For example, the system 600 is applicable to the methods provided in FIG. 4 and FIG. 5, to perform operations thereof or perform variations of the operations thereof.

An embodiment of this application further provides a system. FIG. 20 is a diagram of a structure of a system 700 according to an embodiment of this application. The system 700 may include a first base station 10, a UE 20, and a second base station 50. For a structure of the first base station 10, refer to FIG. 13, FIG. 17, and FIG. 18. For a structure of the UE 20, refer to FIG. 14, FIG. 17, and FIG. 18. For a structure of the first base station 10, refer to FIG. 15, FIG. 17, and FIG. 18. With reference to the method parts in embodiments of this application, the system 700 may perform operations thereof or perform variations of the operations thereof. For example, the system 700 is applicable to the methods provided in FIG. 6A and FIG. 6B and FIG. 11, to perform operations thereof or perform variations of the operations thereof.

An embodiment of this application further provides a computer-readable storage medium. The computer-readable storage medium stores instructions. When the instructions are run on a processor, some or all operations in any method in any one of the foregoing embodiments are implemented.

An embodiment of this application further provides a computer program product, including a computer program. When the computer program is run on a processor, some or all operations in any method in any one of the foregoing embodiments are implemented.

An embodiment of this application further provides a chip, including an interface circuit and a processor. The interface circuit is connected to the processor. The processor is configured to cause the chip to perform some or all operations in any method in any one of the foregoing embodiments.

An embodiment of this application further provides a chip system, including a processor. The processor is coupled to a memory. The memory is configured to store a program or instructions. When the program or the instructions are executed by the processor, the chip system is caused to implement some or all operations in any method in any one of the foregoing embodiments.

Optionally, there may be one or more processors in the chip system. The processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. This is not limited in this embodiment of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this embodiment of this application.

For example, the chip system may be an FPGA, an ASIC, a system-on-a-chip (System On-a-Chip, SoC), a CPU, an NP, a digital signal processing circuit (Digital Signal Processor, DSP), a micro controller unit (Micro Controller Unit, MCU), a programmable controller (Programmable Logic Device, PLD), or another integrated chip.

In the specification, claims, and accompanying drawings of this application, the terms "first", "second", "third", "fourth", and the like (if exists) are intended to distinguish between similar objects but do not necessarily indicate a specific order or sequence. It should be understood that data termed in such a way is interchangeable in proper circumstances, so that embodiments described herein can be implemented in other orders than the order illustrated or described herein. In addition, the terms "include", "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, all or some of the technical solutions in this application may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that may store program code, for example, a USB flash drive, a removable hard disk, a ROM, a RAM, a random access memory, a magnetic disk, or an optical disc.

A person skilled in the art should be aware that in the foregoing one or more examples, the services described in this application may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium. The communication medium includes any medium that enables a computer program to be transmitted from one place to another. The storage medium may be any available medium accessible to a general-purpose computer or a dedicated computer.

In the foregoing specific implementations, the objectives, technical solutions, and the beneficial effects of this application are further described in detail. It should be understood that the foregoing descriptions are merely specific implementations of this application.

The foregoing embodiments are merely intended to describe the technical solutions of this application, but are not intended to limit this application. Although this application is described in detail with reference to the foregoing embodiments, a person of ordinary skill in the art should understand that modifications may still be made to the technical solutions described in the foregoing embodiments or equivalent replacements may still be made to some technical features thereof. However, these modifications or replacements do not make the essence of the corresponding technical solutions depart from the scope of the technical solutions of embodiments of this application.

## Claims

1. A cell handover method, wherein the method is applied to a first base station and comprises:
if it is determined that a user equipment UE needs to be handed over from a first cell to a second cell, determining whether the UE is allowed to use a first radio resource configuration in the second cell, wherein the first radio resource configuration is allocated by the first cell to the UE; and
if the UE is allowed to use the first radio resource configuration in the second cell, sending a first handover command to the UE, wherein the first handover command instructs the UE to use the first radio resource configuration in the second cell.

2. The method according to claim 1, further comprising:
if the UE is not allowed to use the first radio resource configuration in the second cell, sending a second handover command to the UE, wherein the second handover command carries a second radio resource configuration, and the second radio resource configuration is allocated by the second cell to the UE.

3. The method according to claim 1 or 2, further comprising:
receiving a handover request, wherein the handover request is sent by a second base station when the UE needs to be handed over from a third cell to the second cell, the handover request is for requesting that the UE uses a third radio resource configuration in the second cell, and the third radio resource configuration is allocated by the third cell to the UE; and
if the UE is allowed to use the third radio resource configuration in the second cell, sending a first handover request acknowledgment to the second base station, wherein the first handover request acknowledgment indicates that the UE uses the third radio resource configuration in the second cell, so that the second base station sends the first handover command to the UE, and the first handover command further instructs the UE to use the third radio resource configuration in the second cell; or
if the UE is not allowed to use the third radio resource configuration in the second cell, sending a second handover request acknowledgment to the second base station, wherein the second handover request acknowledgment indicates that the UE uses the second radio resource configuration in the second cell, so that the second base station sends the second handover command to the UE.

4. The method according to any one of claims 1 to 3, wherein
a handover command carries a first identifier, the first identifier indicates an identifier of the second cell, and the handover command comprises the first handover command or the second handover command.

5. The method according to claim 1 or 2, further comprising:
determining, according to a pre-stored resource allocation rule, that the UE uses the first radio resource configuration or uses the second radio resource configuration in the second cell.

6. The method according to claim 3, further comprising:
receiving a negotiation request sent by the second base station, wherein the negotiation request indicates a resource allocation rule; and
determining, according to the resource allocation rule, that the UE uses the third radio resource configuration or uses the second radio resource configuration in the second cell.

7. A cell handover method, wherein the method is applied to a user equipment UE and comprises:
receiving a first handover command, wherein the first handover command instructs the UE to use a first radio resource configuration in a second cell, and the first radio resource configuration is allocated by a first cell to the UE; and
based on the first handover command, performing handover from the first cell to the second cell, and using the first radio resource configuration in the second cell.

8. The method according to claim 7, further comprising:
based on the first handover command, performing handover from a third cell to the second cell, and using a third radio resource configuration in the second cell, wherein the first handover command further instructs the UE to use the third radio resource configuration in the second cell, and the third radio resource configuration is allocated by the third cell to the UE.

9. The method according to claim 7 or 8, wherein
a handover command carries a first identifier, the first identifier indicates an identifier of the second cell, and the handover command comprises the first handover command or a second handover command.

10. A cell handover method, wherein the method is applied to a second base station and comprises:
if it is determined that a user equipment UE needs to be handed over from a third cell to a second cell, sending a handover request to a first base station, wherein the handover request is for requesting that the UE uses a third radio resource configuration in the second cell, and the third radio resource configuration is allocated by the third cell to the UE; and
if a first handover request acknowledgment is received, sending a first handover command to the UE, wherein the first handover request acknowledgment indicates, to the second base station, that the UE uses the third radio resource configuration in the second cell, and the first handover command instructs the UE to use the third radio resource configuration in the second cell.

11. The method according to claim 10, wherein
if a second handover request acknowledgment is received, sending a second handover command to the UE, wherein the second handover request acknowledgment indicates, to the second base station, that the UE uses a second radio resource configuration in the second cell, the second handover command carries the second radio resource configuration, and the second radio resource configuration is allocated by the second cell to the UE.

12. The method according to claim 10 or 11, wherein:
a handover command carries a first identifier, the first identifier indicates an identifier of the second cell, and the handover command comprises the first handover command or the second handover command.

13. The method according to any one of claims 10 to 12, further comprising:
sending a negotiation request to the first base station, wherein the negotiation request indicates a resource allocation rule; and
determining, according to the resource allocation rule, that the UE uses the third radio resource configuration in the third cell.

14. A first base station, comprising:
a processing module, configured to: if it is determined that a user equipment UE needs to be handed over from a first cell to a second cell, determine whether the UE is allowed to use a first radio resource configuration in the second cell, wherein the first radio resource configuration is allocated by the first cell to the UE; and
a sending module, configured to: if the processing module determines that the UE is allowed to use the first radio resource configuration in the second cell, send a first handover command to the UE, wherein the first handover command instructs the UE to use the first radio resource configuration in the second cell.

15. The first base station according to claim 14, wherein
the sending module is further configured to: if the processing module determines that the UE is not allowed to use the first radio resource configuration in the second cell, send a second handover command to the UE, wherein the second handover command carries a second radio resource configuration, and the second radio resource configuration is allocated by the second cell to the UE.

16. The first base station according to claim 14 or 15, further comprising:
a receiving module, configured to receive a handover request, wherein the handover request is sent by a second base station when the UE needs to be handed over from a third cell to the second cell, the handover request is for requesting that the UE uses a third radio resource configuration in the second cell, and the third radio resource configuration is allocated by the third cell to the UE;
the sending module is further configured to: if the processing module determines that the UE is allowed to use the third radio resource configuration in the second cell, send a first handover request acknowledgment to the second base station, wherein the first handover request acknowledgment indicates that the UE uses the third radio resource configuration in the second cell, so that the second base station sends the first handover command to the UE, and the first handover command further instructs the UE to use the third radio resource configuration in the second cell; and
the sending module is further configured to: if the processing module determines that the UE is not allowed to use the third radio resource configuration in the second cell, send a second handover request acknowledgment to the second base station, wherein the second handover request acknowledgment indicates that the UE uses the second radio resource configuration in the second cell, so that the second base station sends the second handover command to the UE.

17. The first base station according to any one of claims 14 to 16, wherein
a handover command carries a first identifier, the first identifier indicates an identifier of the second cell, and the handover command comprises the first handover command or the second handover command.

18. The first base station according to claim 14 or 15, wherein
the processing module is specifically configured to determine, according to a pre-stored resource allocation rule, that the UE uses the first radio resource configuration or uses the second radio resource configuration in the second cell.

19. The first base station according to claim 16, wherein
the receiving module is further configured to receive a negotiation request sent by the second base station, wherein the negotiation request indicates a resource allocation rule; and
the processing module is further configured to determine, according to the resource allocation rule, that the UE uses the third radio resource configuration or uses the second radio resource configuration in the second cell.

20. A user equipment UE, comprising:
a receiving module, configured to receive a first handover command, wherein the first handover command instructs the UE to use a first radio resource configuration in a second cell, and the first radio resource configuration is allocated by a first cell to the UE; and
a processing module, configured to: based on the first handover command, perform handover from the first cell to the second cell, and use the first radio resource configuration in the second cell.

21. The UE according to claim 20, wherein the first handover command further instructs the UE to use a third radio resource configuration in the second cell; and
the processing module is further configured to: based on the first handover command, perform handover from a third cell to the second cell, and use the third radio resource configuration in the second cell, wherein the third radio resource configuration is allocated by the third cell to the UE.

22. The UE according to claim 20 or 21, wherein
a handover command carries a first identifier, the first identifier indicates an identifier of the second cell, and the handover command comprises the first handover command or a second handover command.

23. A second base station, comprising:
a sending module, configured to: if a processing module determines that a user equipment UE needs to be handed over from a third cell to a second cell, send a handover request to a first base station, wherein the handover request is for requesting that the UE uses a third radio resource configuration in the second cell, and the third radio resource configuration is allocated by the third cell to the UE; and
the sending module is further configured to: if a receiving module receives a first handover request acknowledgment, send a first handover command to the UE, wherein the first handover request acknowledgment indicates, to the second base station, that the UE uses the third radio resource configuration in the second cell, and the first handover command instructs the UE to use the third radio resource configuration in the second cell.

24. The second base station according to claim 23, wherein
the sending module is further configured to: if the receiving module receives a second handover request acknowledgment, send a second handover command to the UE, wherein the second handover request acknowledgment indicates, to the second base station, that the UE uses a second radio resource configuration in the second cell, the second handover command carries the second radio resource configuration, and the second radio resource configuration is allocated by the second cell to the UE.

25. The second base station according to claim 23 or 24, wherein
a handover command carries a first identifier, the first identifier indicates an identifier of the second cell, and the handover command comprises the first handover command or the second handover command.

26. The second base station according to any one of claims 23 to 25, wherein
the sending module is further configured to send a negotiation request to the first base station, wherein the negotiation request indicates a resource allocation rule; and
the processing module is further configured to determine, according to the resource allocation rule, that the UE uses the third radio resource configuration in the third cell.

27. A system, comprising:
the first base station according to any one of claims 14 to 19; and
the user equipment UE according to any one of claims 20 to 22.

28. The system according to claim 27, further comprising:
the second base station according to any one of claims 23 to 26.
